# EUROPEAN PATENT APPLICATION

(11) **EP 4 780 059 A1**
(43) Date of publication of application: **22.07.2026**
(21) Application number: 23952318.6
(22) Date of filing: 15.09.2023
(51) Int. Cl.: H04W 24/10, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2023/033790
(87) International publication number: WO 2025/057430

(57) **Abstract**

A terminal according to one aspect of the present disclosure includes a receiving section that receives information related to a type of an event based beam report, and a control section that determines a type of a beam report, based on the information. The type of the beam report is one of type 1 indicating an intra-cell beam report and type 2 indicating an inter-cell beam report. According to one aspect of the present disclosure, communication quality/throughput can be enhanced.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is studied that L1L2-triggered mobility (LTM) defined in Rel. 18 is used when a terminal (a user terminal, a User Equipment (UE)) moves between cells.

In mobility of Rel. 19 or later versions, various use cases are assumed. For example, in an industrial communication system, there are cases such as industrial equipment remote control and factory automation. In real-time interactive services, there are AI based/XR services.

In future radio communication systems, it is studied that an (event based) beam report based on an event is supported.

However, studies on definition related to the event based beam report are not sufficient. When these studies are not sufficient, communication with lower delay cannot be implemented, and this may cause reduction in enhancement of communication quality/throughput.

In view of this, the present disclosure has one object to provide a terminal, a radio communication method, and a base station that can enhance communication quality/throughput. Solution to Problem

A terminal according to one aspect of the present disclosure includes a receiving section that receives information related to a type of an event based beam report, and a control section that determines a type of a beam report, based on the information. The type of the beam report is one of type 1 indicating an intra-cell beam report and type 2 indicating an inter-cell beam report. Advantageous Effects of Invention

According to one aspect of the present disclosure, communication quality/throughput can be enhanced.

### Brief Description of Drawings

[FIG. 1] FIG. 1A and FIG. 1B show examples of a unified/common TCI framework.
[FIG. 2] FIG. 2A and FIG. 2B show examples of DCI based TCI state indication.
[FIG. 3] FIG. 3 is a diagram to show an example of a timeline of switching/activation of a TCI state defined in up to Rel. 15/16.
[FIG. 4] FIG. 4 is a diagram to show an example of a TCI state defined in up to Rel. 16.
[FIG. 5] FIG. 5A is a diagram to show an example of movement of a UE in Rel. 17. FIG. 5B is a diagram to show an example of movement of the UE in Rel. 18.
[FIG. 6] FIG. 6 is a flowchart to show an example of processing of an event based beam report.
[FIG. 7] FIG. 7 is a diagram to show an example of a MAC CE for a beam report according to a second embodiment.
[FIG. 8] FIG. 8 is a diagram to show an example of a MAC CE for a beam report according to the second embodiment.
[FIG. 9] FIG. 9 is a diagram to show an example of a MAC CE for a beam report according to the second embodiment.
[FIG. 10] FIG. 10 is a diagram to show an example of a MAC CE for a beam report according to the second embodiment.
[FIG. 11] FIG. 11A and FIG. 11B are diagrams to show a difference between the current beam and a measured value according to the second embodiment.
[FIG. 12] FIG. 12 is a diagram to show an example of mapping of an RSRP measurement report (association between reported values and measured values) according to the second embodiment.
[FIG. 13] FIG. 13A to FIG. 13C are diagrams to show examples of mapping of an RSRP measurement report (association between reported values and measured values) according to the second embodiment.
[FIG. 14] FIG. 14 is a diagram to show an example of a MAC CE for cell switch according to a third embodiment.
[FIG. 15] FIG. 15 is a diagram to show an example of a MAC CE for cell switch according to the third embodiment.
[FIG. 16] FIG. 16 is a diagram to show an example of a MAC CE for cell switch according to the third embodiment.
[FIG. 17] FIG. 17A and FIG. 17B are diagrams to show examples of a beam switch timing according to a fourth embodiment.
[FIG. 18] FIG. 18 is a diagram to show an example of CSI part transmission according to a fifth embodiment.
[FIG. 19] FIG. 19 is a diagram to show an example of a schematic structure of a radio communication system according to one embodiment.
[FIG. 20] FIG. 20 is a diagram to show an example of a structure of a base station according to one embodiment.
[FIG. 21] FIG. 21 is a diagram to show an example of a structure of a user terminal according to one embodiment.
[FIG. 22] FIG. 22 is a diagram to show an example of a hardware structure of the base station and the user terminal according to one embodiment.
[FIG. 23] FIG. 23 is a diagram to show an example of a vehicle according to one embodiment.

### Description of Embodiments

### (CSI Report)

In NR, a UE measures a channel state by using a certain reference signal (or resources for the reference signal), and feeds back (reports) channel state information (CSI) to a base station.

The UE may measure the channel state by using a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), or the like.

A CSI-RS resource may include at least one of a non zero power (NZP) CSI-RS and CSI-Interference Management (IM). The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like. An SSB index may be given to a time position of the SSB in a half frame.

Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, the CQI), such as information determined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information (which may be referred to as CSI report configuration information) related to the CSI report by using higher layer signaling, physical layer signaling (for example, downlink control information (DCI)), or a combination of these. The CSI report configuration information may be configured using an RRC information element "CSI-ReportConfig", for example.

The CSI report configuration information may include information related to report periodicity, an offset, or the like, for example, and these may be expressed in certain time units (units of slots, units of subframes, units of symbols, or the like). The CSI report configuration information may include a configuration ID (CSI-ReportConfigId). With the configuration ID, parameters such as a type of a CSI report method (whether or not the SP-CSI is used or the like) and report periodicity may be identified. The CSI report configuration information may include information (CSI-ResourceConfigId) indicating which CSI measured by using which signal (or resources for which signal) is to be reported.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

Information of QCL as shown in QCL types A to D described above may be referred to as QCL property.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, one common beam (for example, common beam) being indicated by RRC/MAC CE/DCI may be supported, and the one common beam may be applied to a plurality of DL/UL channels/reference signals. For Rel. 18 or later versions, other cases may be supported.

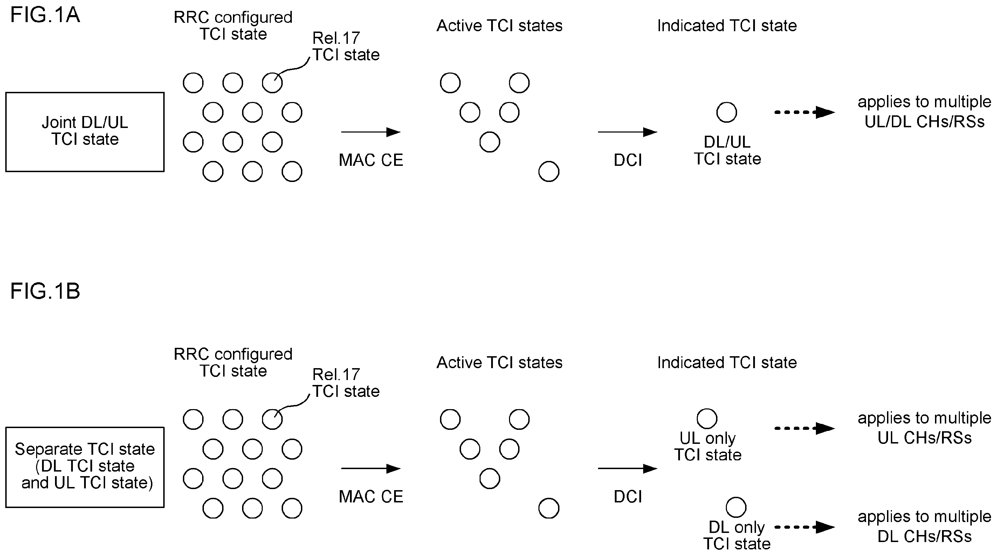

FIG. 1A and FIG. 1B show examples of the unified TCI frameworks. FIG. 1A shows an example of a joint DL/UL TCI state (for example, a Joint DL/UL TCI state), and FIG. 1B shows an example of a separate TCI state (for example, a Separate TCI (DL TCI state and UL TCI state)).

In the example of FIG. 1A, an RRC parameter (information element) configures a plurality of TCI states for both of the DL and the UL. In the present disclosure, TCI states configured by the RRC parameter may be referred to as configured TCI states or configured TCI states (for example, configured TCI states). The MAC CE may activate a plurality of TCI states among the plurality of configured TCI states. DCI may indicate one of the plurality of activated TCI states. In the present disclosure, TCI states indicated by the DCI may be referred to as indicated TCI states or indicated TCI states (for example, Indicated TCI state).

The DCI may be UL DCI (for example, DCI used for scheduling of a PUSCH), or may be DL DCI (for example, DCI used for scheduling of a PDSCH). The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

The method of configuring/indicating the TCI state (for example, the joint DL/UL TCI state) of FIG. 1A and the method of configuring/indicating application (for example, the separate TCI state) of the TCI state of FIG. 1B may be switched for application. Which is applied among the joint DL/UL TCI state and the separate TCI state may be configured from the base station to the UE by a higher layer parameter.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

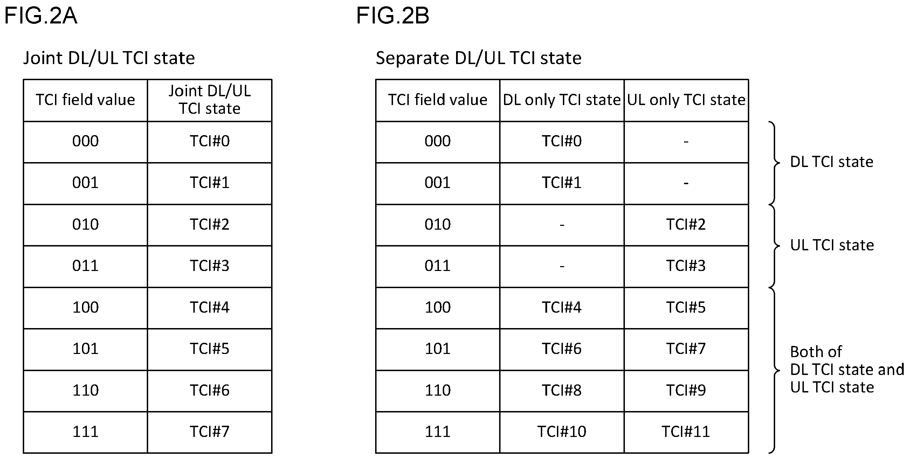

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (Switching of TCI State)

In Rel. 15/16, a delay time for switching of an active TCI state for the UE configured with one or more TCI states in the serving cell is defined.

Even when the UE measures/stores/holds the QCL property, unless the UE performs an L1-RSRP report/beam report to a network (a NW, for example, the base station), the NW cannot recognize whether the UE measures/stores/holds the QCL property. Thus, it is necessary that the UE measures a beam/RS and performs a report, and the UE and the NW have a common recognition regarding whether the TCI state is known or unknown.

In Rel. 16, the TCI state being known may be achieved by satisfying the following condition 0 to condition 5:
(Condition 0): From the last transmission of RS resources used for a report of L1-RSRP measurement of a target TCI state to completion of switching of an active TCI state, the RS resources for L1-RSRP measurement are an RS of the target TCI state or an RS having a QCL relationship with the target TCI state.
(Condition 1): A TCI state switch indication (TCI state switch command) is received within 1280 ms from the last transmission of the RS resources for a beam report or measurement.
(Condition 2): The UE has transmitted at least one L1-RSRP report for the target TCI state before the TCI state switch indication.
(Condition 3): During a period of switching the TCI state, the TCI state remains detectable.
(Condition 4): During a period of switching the TCI state, the SSB associated with the TCI state remains detectable.
(Condition 5) A Signal to Noise Ratio (SNR) of the TCI state is equal to or higher than -3 dB.

The TCI state being unknown means that the TCI state is not known.

Note that, in the present disclosure, a TCI state being known may be referred to as a "known TCI state", and a TCI state being unknown may be referred to as an "unknown TCI state".

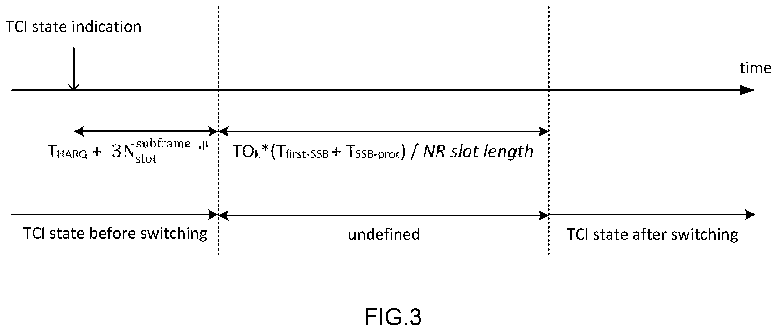

When a MAC CE is used for switching of the TCI state (MAC-CE based TCI state switch), the target TCI state (TCI state after switching) is a known TCI state, and the UE receives the physical downlink shared channel (PDSCH) including an activation command of the TCI state (TCI state indication) in slot n, the UE receives the physical downlink control channel (PDCCH) of the target TCI state of the serving cell in which switching of the TCI state occurs in the first slot after slot n + T_{HARQ} + 3N^{subframe,µ}ₛₗₒₜ + TOₖ*(T_{first-SSB} + T_{SSB-proc})/(NR slot length). The UE can receive the PDCCH of an old TCI state (before switching) before slot n + T_{HARQ} + 3N^{subframe,µ}ₛₗₒₜ. In a period from slot **n** + T_{HARQ} + 3N^{subframe,µ}ₛₗₒₜ to slot n + T_{HARQ} + 3N^{subframe,µ}ₛₗₒₜ + TOₖ*(T_{first-SSB} + T_{SSB-proc})/(NR slot length)**,** the TCI state applied by the UE is undefined (see FIG. 3).

Here, T_{HARQ} indicates timing from transmission of a downlink data signal (for example, a PDSCH) to transmission confirmation information (for example, HARQ-ACK information). N^{subframe,µ}ₛₗₒₜ indicates the number of slots per subframe for a subcarrier configuration µ. T_{first-SSB} is time until first transmission of the SSB after the UE decodes a MAC CE command used for activation of the TCI state. T_{SSB-proc} is 2 ms. TOₖ is 1 when the target TCI state is not included in a list of active TCI states for the PDSCH, otherwise 0. NR slot length indicates the length of a slot.

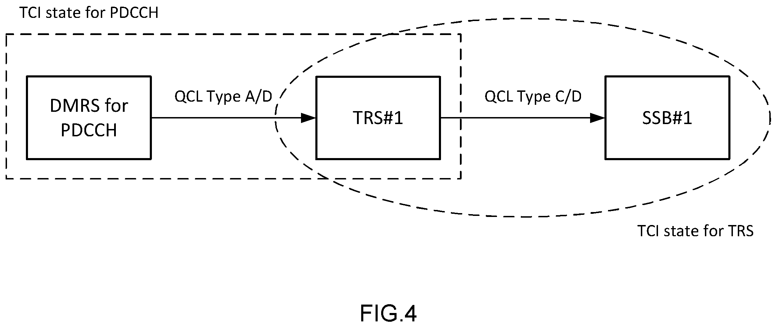

FIG. 4 is a diagram to show an example of the TCI state defined in up to Rel. 16. As shown in FIG. 4, the TCI state of the PDCCH indicates a relationship of QCL type A/D between the demodulation reference signal (DMRS) for the PDCCH and the TRS (or the CSI-RS, here, TRS #1). The TCI state of the TRS indicates a relationship of QCL type C/D between the TRS and the SSB (here, SSB #1).

When a MAC CE is used for switching of the TCI state, the target TCI state is an unknown TCI state, and the UE receives the PDSCH including an activation command of the TCI state in slot n, the UE receives the PDCCH of the target TCI state of the serving cell in which switching of the TCI state occurs in the first slot after slot **n** + T_{HARQ} + 3N^{subframe,µ}ₛₗₒₜ + T_{L1-RSRP} + TOᵤₖ* (T_{firts-SSB} + T_{SSB-proc})/(NR slot length). The UE can receive the PDCCH of an old TCI state (before switching) before slot n + T_{HARQ} + 3N^{subframe,µ}ₛₗₒₜ.

Here, TOᵤₖ is 1 for L1-RSRP measurement using the CSI-RS or switching of the TCI state configured with a QCL type other than QCL type D. On the other hand, TOᵤₖ is 0 for switching of the TCI state configured with at least QCL type D and L1-RSRP measurement using the SSB.

T_{first-SSB} is time until first transmission of the SSB after L1-RSRP measurement when switching of the TCI state configured with at least QCL type D is performed. Alternatively, T_{first-SSB} is time until first transmission of the SSB after the UE decodes a MAC CE command used for activation of the TCI state configured with other than QCL type D.

As compared to when the target TCI state is a known TCI state, when the target TCI state is an unknown TCI state, switching of the TCI state additionally requires time of T_{L1-RSRP}. T_{L1-RSRP} is time related to received power measurement. T_{L1-RSRP} is 0 in frequency range (FR) 1, or in FR2 in which QCL type D is not configured. Otherwise, it is time required for determination/refinement of a receive beam in FR2.

When downlink control information (DCI) is used for switching of the TCI state (DCI based TCI state switch), the target TCI state is a known TCI state, and the higher layer parameter tci-PresentInDCI for the CORESET for scheduling the PDSCH is configured to "enabled" in slot n for the UE, the PDSCH of the target TCI state of the serving cell in which switching of the TCI state occurs is received in the first slot after slot n + timeDurationForDCI. Here, timeDurationForDCI is time required for reception of the PDCCH and application to reception of DCI for the PDSCH of information (spatial QCL information) related to spatial relation/QCL.

Furthermore, when RRC signaling is used for switching of the TCI state (RRC based TCI state switch), the target TCI state is a known TCI state, and the UE receives the PDSCH for transmitting an RRC activation command of the TCI state in slot n, the UE receives the PDCCH of the target TCI state of the serving cell in which switching of the TCI state occurs in the first slot after slot n + (T_{RRC_processing} + TOₖ*(T_{first-SSB} + T_{SSB-proc}))/(NR slot length) .

Here, T_{RRC_processing} is delay related to RRC processing (RRC processing delay). T_{first-SSB} is time until first transmission of the SSB after RRC processing of the UE. T_{SSB-proc}, TOₖ, and (NR slot length) are the same as those in the case of the known TCI state in switching of the TCI state using a MAC CE.

When RRC signaling is used for switching of the TCI state (RRC based TCI state switch), the target TCI state is an unknown TCI state, and the UE receives the PDSCH for transmitting an RRC activation command of the TCI state in slot n, the UE receives the PDCCH of the target TCI state of the serving cell in which switching of the TCI state occurs in the first slot after slot n + (T_{RRC_processing} + T_{L1-RSRP} + TOᵤₖ* (T_{firts-SSB} + T_{SSB-proc}))/(NR slot length) .

Here, T_{RRC_processing} is delay related to RRC processing (RRC processing delay). T_{SSB-proc}, TOᵤₖ, and (NR slot length) are the same as those in the case of the unknown TCI state in switching of the TCI state using a MAC CE.

T_{first-SSB} is time until first transmission of the SSB after L1-RSRP measurement when switching of the TCI state configured with at least QCL type D is performed. Alternatively, T_{first-SSB} is time until first transmission of the SSB after the UE decodes a MAC CE command used for activation of the TCI state configured with other than QCL type D.

In Rel. 17, a delay time for switching related to the unified TCI state is defined.

For example, when an RRC parameter (DLorJoint-TCIState) related to the unified TCI state is configured for the UE for a DL channel of the serving cell, the defined delay time may be applied.

In MR-DC or stand-alone NR, the delay time is also applied to all the lists of a plurality of serving cells in simultaneous TCI update lists (for example, simultaneousU-TCI-UpdateList1, simultaneousU-TCI-UpdateList2, simultaneousU-TCI-UpdateList3, simultaneousU-TCI-UpdateList4) in a plurality of CCs/cells.

When a target DL TCI state refers to an additional PCI different from a physical cell ID (PCI) of the serving cell configured with the DL TCI state, the delay time may be applied on the condition that the following conditions are satisfied:
- Active BWPs of the serving cell and a cell of the additional PCI are the same.
- A center frequency, a subcarrier spacing (SCS), and a system frame number (SFN) offset of the cell of the additional PCI are the same as those of the serving cell.
- The cell of the additional PCI is known to the UE.

When the following conditions are satisfied, the cell of the additional PCI may be known:
- The UE transmits a valid L3 measurement report to the cell of the additional PCI during the last 5 seconds before L1-RSRP measurement is configured.
- A timing offset between the serving cell and the cell of the additional PCI is within a CP of a corresponding SCS.

When the conditions are not satisfied, the cell of the additional PCI may be unknown.

The DL TCI state in the unified TCI state being known may be achieved by satisfying the following conditions:
- From the last transmission of RS resources used for a report of L1-RSRP measurement of a target DL TCI state to completion of switching of an active DL TCI state, the RS resources for L1-RSRP measurement are an RS of the target DL TCI state or an RS having a QCL relationship with the target DL TCI state.
- A DL TCI state switch indication (downlink TCI state switch command) is received within 1280 ms from the last transmission of the RS resources for a beam report or measurement.
- The UE has transmitted at least one L1-RSRP report for the target DL TCI state before the DL TCI state switch indication.
- During a period of switching the DL TCI state, the DL TCI state remains detectable.
- During a period of switching the DL TCI state, the SSB associated with the DL TCI state remains detectable.
- A Signal to Noise Ratio (SNR) of the DL TCI state is equal to or higher than -3 dB.

The SSB may be associated with a PCI of the serving cell or a PCI different from the serving cell PCI.

When the above conditions are not satisfied, the DL TCI state may be unknown.

In a case of joint TCI state switching, when a target PL-RS is not maintained, the UE need not be expected to perform reception in the DL based on the target TCI state before completing switching of DL and UL TCI states.

When a MAC CE is used for switching of the DL TCI state (MAC-CE based downlink TCI state switch), the target TCI state (TCI state after switching) is a known TCI state, and the UE receives the PDSCH including an activation command of the TCI state (TCI state indication) in slot n, the UE receives the physical downlink control channel (PDCCH) of the target TCI state of the serving cell in which switching of the TCI state occurs in the first slot after slot n + T_{HARQ} + 3N^{subframe,µ}ₛₗₒₜ + TOₖ*(T_{first-SSB} + T_{SSB-proc})/(NR slot length). The UE can receive a UE-specific PDSCH/PDCCH by using an old TCI state (before switching) before slot n + T_{HARQ} + 3N^{subframe,µ}ₛₗₒₜ. In a period from slot **n** + T_{HARQ} + 3N^{subframe,µ}ₛₗₒₜ to slot n + T_{HARQ} + 3N^{subframe,µ}ₛₗₒₜ + TOₖ*(T_{first-SSB} + T_{SSB-proc})/(NR slot length), the TCI state applied by the UE is undefined.

Here, T_{HARQ} indicates timing from transmission of a downlink data signal (for example, a PDSCH) to transmission confirmation information (for example, HARQ-ACK information). N^{subframe,µ}ₛₗₒₜ indicates the number of slots per subframe for a subcarrier configuration µ**.** T_{first-SSB} is time until first transmission of the SSB after the UE decodes a MAC CE command used for activation of the TCI state. T_{SSB-proc} is 2 ms. TOₖ is 1 when the target TCI state is not included in a list of active TCI states for the PDSCH, otherwise 0. NR slot length indicates the length of a slot.

When a MAC CE is used for switching of the DL TCI state, the target TCI state is an unknown TCI state, and the UE receives the PDSCH including an activation command of the TCI state in slot n, the UE receives the PDCCH of the target TCI state of the serving cell in which switching of the TCI state occurs in the first slot after slot n + T_{HARQ} + 3N^{subframe,µ}ₛₗₒₜ + T_{L1-RSRP} + TOᵤₖ* (T_{firts-SSB} + T_{SSB-proc})/(NR slot length). The UE can receive a UE-specific PDSCH/PDCCH by using an old TCI state (before switching) before slot **n** + T_{HARQ} + 3N^{subframe,µ}ₛₗₒₜ.

Here, TOᵤₖ is 1 for L1-RSRP measurement using the CSI-RS or switching of the TCI state configured with a QCL type other than QCL type D. On the other hand, TOᵤₖ is 0 for switching of the TCI state configured with at least QCL type D and L1-RSRP measurement using the SSB.

T_{first-SSB} is time until first transmission of the SSB after L1-RSRP measurement when switching of the TCI state configured with at least QCL type D is performed. Alternatively, T_{first-SSB} is time until first transmission of the SSB after the UE decodes a MAC CE command used for activation of the TCI state configured with other than QCL type D.

As compared to when the target TCI state is a known TCI state, when the target TCI state is an unknown TCI state, switching of the TCI state additionally requires time of T_{L1-RSRP}. T_{L1-RSRP} is time related to received power measurement. T_{L1-RSRP} is 0 in frequency range (FR) 1, or in FR2 in which QCL type D is not configured. Otherwise, it is time required for determination/refinement of a receive beam in FR2.

For example, when an RRC parameter (DLorJoint-TCIState (when unifiedTCI-StateType indicates Joint), or UL-TCIState) related to the unified TCI state is configured for the UE for a UL channel/signal of the serving cell, the defined delay time may be applied.

In MR-DC or stand-alone NR, the delay time is also applied to all the lists of a plurality of serving cells in simultaneous TCI update lists (for example, simultaneousU-TCI-UpdateList1, simultaneousU-TCI-UpdateList2, simultaneousU-TCI-UpdateList3, simultaneousU-TCI-UpdateList4) in a plurality of CCs/cells.

Regarding the UL TCI state (or the joint TCI state), "known/unknown" of the cell of the additional PCI and "known/unknown" of the UL TCI state are the same as those obtained by replacing "DL TCI state" of the cell of the additional PCI and "known/unknown" of the TCI state regarding the DL TCI state with "UL TCI state (or joint TCI state)".

In a case of joint TCI state switching, the UE need not be expected to perform transmission in the UL before completing switching of DL and UL TCI states.

When a MAC CE is used for switching of the separate UL TCI state/joint TCI state for a UL channel/signal (MAC-CE based uplink TCI state switch), the target TCI state (TCI state after switching) is a known TCI state, and the UE receives the PDSCH including an activation command of the TCI state (TCI state indication) in slot n, the UE can transmit a UL signal of the target TCI state in slot n + T_{HARQ} + 3N^{subframe,µ}ₛₗₒₜ + NM* (T_{first-target-PL-RS} + 4*T_{target-PL-RS} + 2 ms) / (NR slot length). Here, the UL channel/signal may be a PUCCH, a PUSCH, or a semi-persistent/periodic/aperiodic SRS (when beamCorrespondenceWithoutUL-BeamSweeping is set to 1).

When a MAC CE is used for switching of the separate UL TCI state/joint TCI state for a UL channel/signal, the target TCI state is an unknown TCI state, and the UE receives the PDSCH including an activation command of the TCI state (TCI state indication) in slot n**,** the UE can transmit a UL signal of the target TCI state in slot n + T_{HARQ} + 3N^{subframe,µ}ₛₗₒₜ + (T_{L1-RSRP} + T_{first-target-PL-RS} + 4*T_{target-PL-RS} + 2 ms)/(NR slot length) .

Here, T_{HARQ} indicates timing from transmission of a downlink data signal (for example, a PDSCH) to transmission confirmation information (for example, HARQ-ACK information). N^{subframe,µ}ₛₗₒₜ indicates the number of slots per subframe for a subcarrier configuration µ**.** NR slot length indicates the length of a slot.

NM is 1 when a target PL-RS is maintained, otherwise 0.

When the target TCI state is unknown, T_{target-PL-RS} is time until first transmission of a path loss RS is performed after L1-RSRP measurement. When the target TCI state is known, T_{target-PL-RS} is time until first transmission of a path loss RS is performed after a MAC CE command is decoded by the UE.

When the PL-RS is related to the serving cell, T_{target-PL-RS} is periodicity of the target PL-RS being the SSB or the NZP CSI-RS. When the PL-RS is related to a PCI different from the serving cell, T_{target-PL-RS} is periodicity of the PL-RS being the SSB.

As compared to when the target TCI state is a known TCI state, when the target TCI state is an unknown TCI state, switching of the TCI state additionally requires time of T_{L1-RSRP}. T_{L1-RSRP} is time related to received power measurement. T_{L1-RSRP} is 0 in frequency range (FR) 1, or in FR2 in which QCL type D is not configured. Otherwise, it is time required for determination/refinement of a receive beam in FR2.

### (L1/L2 Inter-Cell Mobility)

It is studied that the UE performs UL transmission to one or a plurality of cells/TRPs. As a procedure in this case, the following scenario 1 or scenario 2 is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to inter-cell mobility of a multi-TRP, but may be a scenario not corresponding to inter-cell mobility of a multi-TRP, for example.

(1) The UE receives, from the serving cell, a configuration of the SSB for beam measurement of a TRP corresponding to a PCI different from the serving cell and a configuration necessary for using radio resources for data transmission and reception including resources of the different PCI.
(2) The UE performs beam measurement of the TRP corresponding to the different PCI, and reports beam measurement results to the serving cell.
(3) Based on the report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to always cover the serving cell, also including a case of a multi-TRP. Similarly to existing systems, the UE needs to use common channels (a broadcast control channel (BCCH), a paging channel (PCH)) and the like from the serving cell.

In scenario 1, when the UE transmits and receives a signal to and from an additional cell/TRP (a TRP corresponding to the PCI of the additional cell), the serving cell (assumption of the serving cell in the UE) is not changed. The UE is configured with a higher layer parameter related to the PCI of the non-serving cell from the serving cell. Scenario 1 may be applied in Rel. 17, for example.

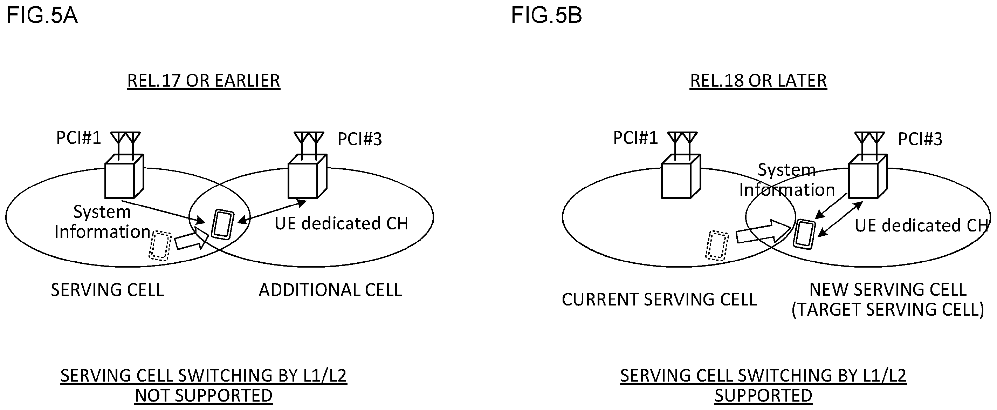

FIG. 5A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cell by L1/L2 is not supported.

The additional cell is a cell having an additional PCI different from the PCI of the serving cell. The UE can receive/transmit a UE-dedicated channel from the additional cell. In order to receive a UE common channel (for example, system information/paging/short message), the UE needs to be present in coverage of the serving cell. When the UE moves out of the coverage of the serving cell, the cell needs to be switched using handover (also referred to as L3 mobility) or the like.

<Scenario 2>

In scenario 2, L1/L2 inter-cell mobility is applied. In L1/L2 inter-cell mobility, serving cell change can be performed by using a function such as beam control without an RRC reconfiguration. In other words, transmission and reception to and from the additional cell can be performed without handover. Handover causes a period in which data communication cannot be performed due to the necessity of RRC reconnection or the like, and thus by applying L1/L2 inter-cell mobility that does not require handover, data communication can be continued even in a case of serving cell change. Scenario 2 may be applied in Rel. 18, for example. In scenario 2, the following procedure is performed, for example.

(1) The UE receives, from the serving cell, a configuration of the SSB of a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to the serving cell change may be performed. The configuration may be performed together with the configuration in (1), or may be performed separately.
(4) Based on the report, the TCI state of the cell having the different PCI may be activated by L1/L2 signaling according to the serving cell change. Activation of the TCI state and the serving cell change may be performed separately.
(5) The UE changes the serving cell (assumption of the serving cell), and starts reception/transmission by using the preconfigured UE-dedicated channel and TCI state.

In other words, in scenario 2, the serving cell (assumption of the serving cell in the UE) is updated by L1/L2 signaling. Scenario 2 may be applied in Rel. 18.

FIG. 5B is a diagram to show an example of movement of the UE in Rel. 18. In Rel. 18, the serving cell is switched by L1/L2 (for example, DCI/MAC CE). The UE can receive/transmit a UE-dedicated channel/common channel from/to a new serving cell (or a target serving cell). The UE may exit the coverage of the current serving cell (for example, Current serving cell).

### (Types of Beam Reports)

### <Intra-Cell Beam Report of Rel. 15/16>

In Rel. 15/16, an intra-cell beam report is supported. For example, an L1-RSRP/SINR report may be configured by higher layer signaling (RRC).

For example, in L1-RSRP calculation, when resources are associated with QCL type C/type D, the UE may be configured with one or both of CSI-RS resources and SS/PBCH block resources.

The UE may be configured with up to 16 CSI-RS resource sets, each set including up to 64 resources. In all the resource sets, a total number of different CSI-RS resources is 128 or less.

In the L1-RSRP report, when a higher layer parameter nrofReportedRS (in CSI-ReportConfig, for example) is configured to 1, a reported L1-RSRP value is defined as a 7-bit value in a range of [-140 to -44] dBm with a step size of 1 dB.

Here, a maximum measured value of L1-RSRP is quantized to a 7-bit value in a range of [-140 to -44] dBm with a step size of 1 dB. A differential value of L1-RSRP is quantized to a 4-bit value.

The differential value is calculated with a step size of 2 dB with reference to the maximum measured value being a part of the same L1-RSRP report instance.

For example, in L1-SINR calculation and channel measurement, the UE may be configured with one or both of NZP CSI-RS resources and SS/PBCH block resources. For interference measurement, the UE may be configured with NZP CSI-RS resources or CSI-IM resources.

For channel measurement, the UE may be configured with a CSI resource configuration (setting) related to up to 16 CSI-RS resource sets, each including up to 64 CSI resources or SS/PBCH block resources.

In the L1-SINR report, when the higher layer parameter nrofReportedRS is configured to 1, a reported L1-SINR value is defined as a 7-bit value in a range of [-23 to 40] dBm with a step size of 0.5 dB.

When the higher layer parameter nrofReportedRS is configured to larger than 1, or a higher layer parameter groupBasedBeamReporting is configured to "enabled", the UE uses a differential value based L1-SINR value for the report.

The differential value is calculated with a step size of 1 dB with reference to the maximum measured value being a part of the same L1-SINR report instance.

In the present disclosure, the intra-cell beam report of Rel. 15/16 (which may be simply referred to as the intra-cell beam report) may be referred to as a beam report of type 1 (beam report type 1) or a beam report for intra-cell beam switch.

### <Inter-Cell Beam Report of Rel. 17>

As described above, in Rel. 17, L1/L2 inter-cell mobility is supported. For example, the UE can transmit and receive a UL/DL channel/signal to and from a PCI of a cell different from the PCI of the serving cell. For example, when the non-serving cell has RSRP larger than that of the serving cell, the UE can transmit and receive a UL/DL channel/signal to and from the non-serving cell without performing handover.

In the L1-RSRP report, similarly to Rel. 15/16, an absolute value/differential value of L1-RSRP may be used. In the inter-cell beam report of Rel. 17 (a beam report of type 2-1 to be described later), each L1-RSRP value and a PCI ID (for the serving cell/additional cell/candidate cell) are associated. The association between the L1-RSRP value and the PCI ID may be configured/indicated by higher layer signaling/physical layer signaling.

A configuration by higher layer signaling supports up to seven additional cells. Note that ID = 0 means the PCI of the serving cell.

In the present disclosure, the inter-cell beam report (in Rel. 17/18) may be referred to as a beam report of type 2 (beam report type 2). The beam report of type 2 can be further classified into types 2-1 and 2-2 to be described later.

In the present disclosure, the beam report of Rel. 17 may be referred to as a beam report of type 2-1 or beam report for inter-cell beam switch.

### <Inter-Cell Beam Report of Rel. 18>

In a beam report of Rel. 18, only an SSB based L1-RSRP report (beam report) is supported. Here, the number L of candidate cells may be one of 1 to 4, and the number M of beams per cell may be one of 1 to 4. For example, in the beam report, a 7-bit absolute value (a maximum L1-RSRP value among all the cells) is reported for one cell, and all the remaining L1-RSRP values are reported as differential values.

For beam selection in the SSB based L1-RSRP report, a maximum value of M*L that can be configured in RRC for M and L described above and combinations of M and L may depend on a UE capability.

In the L1-RSRP report, similarly to Rel. 15/16/17, an absolute value/differential value of L1-RSRP may be used.

In the L1-RSRP report, a reported L1-RSRP value is defined as a 7-bit value in a range of [-140 to -44] dBm with a step size of 1 dB.

Here, a maximum measured value of L1-RSRP is quantized to a 7-bit value in a range of [-140 to -44] dBm with a step size of 1 dB. A differential value of L1-RSRP is quantized to a 4-bit value.

The differential value is calculated with a step size of 2 dB with reference to the maximum measured value being a part of the same L1-RSRP report instance.

The L1-RSRP report includes an SSBRI between configured candidate cells. In other words, the L1-RSRP report includes L1-RSRP corresponding to the SSBRI of the configured candidate cells. The format may be the same as that of existing specifications.

In the present disclosure, the beam report of Rel. 18 may be referred to as a beam report of type 2-2 or a beam report for cell switch. Note that the beam report of type 2-2 does not include information (PCI ID) related to the PCI. Instead, the SSBRI may include information related to the PCI. For example, when four cells include 64 SSBs, the SSBRI is one of {0, 1, ..., 255}.

### (Event Based Beam Report)

In future radio communication systems, it is studied that an (event based) beam report based on an event is supported. The beam report based on an event may be referred to as an event triggered beam report (event triggered beam reporting), and may mean a (UE-initiated) beam report initiated by the UE.

### <Applicable Cases>

The event based beam report may be applied to at least one of the following case 1 and case 2, for example:
- {Case 1}: L1-RSRP/SINR beam report including the serving cell PCI/additional PCI (for example, an L1-RSRP/SINR beam report including the serving cell/additional PCI cell for Rel-18 L1/L2 mobility with L1/L2 intra-cell mobility/multi-TRP intra-cell/cell switching).
- {Case 2}: L1-RSRP/SINR beam report including only the serving cell PCI.

When a specific event occurs (which may be interpreted as "a specific condition is satisfied/not satisfied" in the present disclosure), the UE may perform a report of measurement results (for example, L1-RSRP/L1-SINR) to the NW (for example, the base station).

The specific event may be at least one of an event related to at least one of the serving cell and an additional cell and an event related to a beam report including at least one of the PCI of the serving cell and the PCI of the additional cell, for example.

### <<Events in Case 1>>

Examples of events in case 1 described above will be described. The event may mean an event related to the serving cell and the additional cell and an event related to a beam report including the PCI of the serving cell and the PCI of the additional cell, for example.

### {Option 1}

The beam report (for example, an aperiodic CSI report) may be triggered by reusing one or a plurality of existing events (for example, at least one of the following events A2 to A6 and I1) of Radio Resource Management (RRM). In other words, when at least one of the following events A2 to A6 and I1 occurs (a condition of the event is satisfied), both of the RRM report and the CSI report may be triggered, and the UE may transmit both of the RRM report and the CSI report.

Note that, in the present disclosure, the RRM report may be interchangeably interpreted as an L3 measurement report.

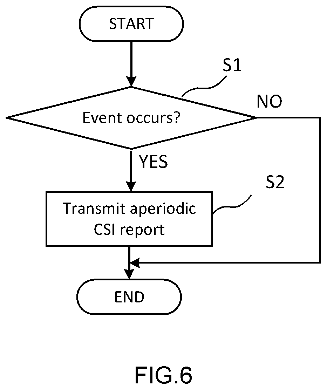

FIG. 6 is a flowchart to show an example of processing of the event based beam report. The UE determines whether an event (for example, at least one of the following events A2 to A6 and I1) has occurred (S1). In a case of YES in S1, the UE transmits an aperiodic CSI report (and RRM report) (S2), and in a case of NO, the UE ends processing related to the event based beam report. The processing of FIG. 6 may be repeatedly performed every certain period.

In the present disclosure, an aperiodic CSI report being triggered and the UE transmitting an aperiodic CSI report may be interchangeably interpreted. A CSI report, an L1 beam report, and a beam report may be interchangeably interpreted.

In the following events A2 to A6, the measurement results may be measurement results of at least one of RSRP (L1-RSRP/L3-RSRP), RSRQ, and SINR (RS-SINR). In the conditions of the following events A2 to A6, "poor" may mean "low", and "good" may mean "high". In the conditions of the following events A2 to A6, an SpCell may mean a special cell, and mean at least one of a Primary Cell (PCell) and a Primary Secondary Cell (PSCell). In the following events A2 to A6 and I1, a parameter corresponding to hysteresis may be added to/subtracted from the measurement results. Respective thresholds may be the same, or may be different. A neighbour cell may be the non-serving cell.

Event A2: The measurement results of the serving cell are poorer than the threshold.

Event A3: The measurement results (value obtained by adding an offset to the measurement results) of the neighbour cell are better than the measurement results (value obtained by adding an offset to the measurement results) of the SpCell.

Event A4: The measurement results (value obtained by adding an offset to the measurement results) of the neighbour cell are better than the threshold.

Event A5: The measurement results of the SpCell are poorer than a first threshold, and the measurement results (value obtained by adding an offset to the measurement results) of the neighbour cell are better than a second threshold.

Event A6: The measurement results (value obtained by adding an offset to the measurement results) of the neighbour cell are better than the measurement results (value obtained by adding an offset to the measurement results) of the serving cell (Secondary Cell (SCell)).

Event I1: The measurement results of interference are higher than the threshold.

According to option 1, a trigger of the RRM report can be reused as a trigger of the beam report, and thus the configuration is facilitated.

### {Option 2}

One or a plurality of new events (separate from the events for the RRM report) may be defined, and an aperiodic L1 beam report (CSI report) may be triggered. The events are similar to the above-described events A2 to A6 and I1 also applied to the trigger of the RRM report, but may be different from one of events A2 to A6 and I1 (trigger of the RRM report) in at least one of the following options 2-1 to 2-4.

### {{Option 2-1}}

The thresholds may be different. In other words, events A2 to A6 and I1 may be used for the L1 beam report (CSI report) by using thresholds different from those for the events for the RRM report.

### {{Option 2-2}}

The event may occur based on the measurement results of reference signal received power in layer 1 (L1-RSRP). In other words, comparison based not on L3-RSRP but on L1-RSRP may be performed. Alternatively, L1-RSRP subjected to new filtering, whose time scale (periodicity of update/measurement) is between L1-RSRP and L3-RSRP (or is the same as L1-RSRP or L3-RSRP), may be applied. Alternatively, other metrics, such as L1-SINR and L3-RSRQ, may be applied. For example, as a new event, the following event A2' may be applied:
Event A2': The L1-RSRP measurement results of the serving cell are poorer than the threshold.

### {{Option 2-3}}

It may be based on comparison of the measurement results at one beam level, a plurality of beam levels (independent measurement results of a plurality of beams are integrated into one value), or a cell level. For example, the following event A4' or event A4'' may be applied:
Event A4': The measurement results of one beam from the neighbour cell are better than the threshold.
Event A4'': A statistical value (for example, an average value, a total value, or the like) of the measurement results of a plurality of beams (for example, X best beams) is better than the threshold. X may be fixed, or may be configurable by higher layer signaling or the like.

### {{Option 2-4}}

The number of beams satisfying the condition (for example, one of events A2 to A6 and I1) may be considered. For example, when X beams satisfy event A4' (the measurement results of X beams from the neighbour cell are better than the threshold), the UE may perform the CSI report.

Note that an example combining at least two of 2-1 to 2-4 above may be applied. For example, A4‴ is considered as an event combining 2-2 and 2-3. As an event combining 2-2, 2-3, and 2-4, A4ʺʺ is considered:
Event A4‴: The L1-RSRP measurement results of one beam from the neighbour cell are better than the threshold.
Event A4ʺʺ: The L1-RSRP of each of the X beams from the neighbour cell is better than the threshold.

According to option 2, the CSI report can be performed quickly, as compared to a case in which the existing events for the RRM report using RRC are used.

### {Option 3}

An aperiodic L1 beam report (CSI report) may be triggered by using any combination of two or more events of option 1 and option 2 described above.

The existing events for the RRM report and one or more events of option 2 may be combined. For example, when both of event A4 and new event A4‴ occur, the CSI report may be triggered.

Two or more events of option 2 may be combined. For example, when both of event A2' and new event A4‴ are satisfied, the CSI report may be triggered.

### <<Events in Case 2>>

Examples of events in case 2 described above will be described. The event may mean an event related only to the serving cell and an event related to a beam report including only the PCI of the serving cell, for example.

One or a plurality of new events (separate from the events for the RRM report) may be defined, and an aperiodic L1 beam report (CSI report) may be triggered. The event may be at least one of the following events B2 to B6 and K1:
Event B2: The measurement results of the current beam are poorer than the threshold.
Event B3: The measurement results (value obtained by adding an offset to the measurement results) of another beam are better than the measurement results (value obtained by adding an offset to the measurement results) of the current beam.
Event B4: The measurement results (value obtained by adding an offset to the measurement results) of another beam are better than the threshold.
Event B5: The measurement results of the current beam are poorer than a first threshold, and the measurement results (value obtained by adding an offset to the measurement results) of another beam are better than a second threshold.
Event B6: The measurement results (value obtained by adding an offset to the measurement results) of the current beam are poorer than the threshold, and the measurement results (value obtained by adding an offset to the measurement results) of another beam are better than the measurement results (value obtained by adding an offset to the measurement results) of the current beam.
Event K1: The measurement results of interference are higher than the threshold.

Note that the names/symbols (for example, A2 to A6, B2 to B6, I1, K1, and the like) related to the events in the present disclosure are merely examples, and are not limited to the examples. For example, the names of the events in case 2 and the names of the events in case 1 with corresponding (numbers) may be the same.

Note that, for at least one of the events (events related to case 1/case 2) in the present disclosure, duration/counter in which (the condition of) the event is satisfied may be defined. When at least one of the conditions of the events satisfies a condition related to specific duration/counter, the UE/NW may determine that the condition of the event is satisfied. For example, when the measurement results of another beam are better than the measurement results of the current beam in a time window of 100 ms, the UE may determine that the condition of the event of B3 is satisfied. For example, when the measurement results of another beam are better than the measurement results of the current beam 10 times every plurality of samples, the UE may determine that the condition of the event of B3 is satisfied.

In the present disclosure, the "current beam" may mean the SSB/CSI-RS having a QCL relationship (QCLed) with the PDCCH, for example.

The PDCCH may be a PDCCH corresponding to the CORESET determined by a specific rule/higher layer parameter configuration, for example. The CORESET may be a CORESET having a specific (for example, lowest/highest) CORESET ID, for example.

The CSI-RS may be a periodic/semi-persistent/aperiodic CSI-RS, for example. The SSB/CSI-RS may be limited to a periodic CSI-RS/SSB, for example.

In the present disclosure, the "current beam" may be an indicated TCI state (joint/DL/UL TCI state) in the current unified TCI state, for example. The "current beam" may be a QCL source RS (QCL type D/A) related to the current indicated TCI state, for example.

In the present disclosure, the "current beam" may be a beam/resource index (for example, a CRI/SSBRI) reported in specific (for example, latest) L1-RSRP/L1-SINR, for example.

In the present disclosure, "another beam" may be a beam/SSB/CSI-RS/TCI state other than the "current beam", for example.

For the UE, a set (candidate beam set) of a plurality of beams may be configured. The UE may select/determine "another beam" from the set.

In the present disclosure, "poor (poorer) /good (better)" may mean low (lower)/high (higher) measurement results (for example, RSRP/SINR/RSRQ), for example.

The thresholds may be defined in a specification in advance, may be configured/indicated/notified using higher layer signaling (RRC/MAC CE)/DCI, may be reported by a UE capability, or may be defined by a combination of these. For example, as the thresholds, existing thresholds (for example, thresholds used in RRM/case 1) may be reused.

The offsets related to the thresholds may be defined in a specification in advance, may be configured/indicated/notified using higher layer signaling (RRC/MAC CE)/DCI, may be reported by a UE capability, or may be defined by a combination of these.

Note that, in the present disclosure, a (UE initiated) beam report initiated by the UE, an event triggered beam report, a beam report based on an event, and an event based beam report may be interchangeably interpreted.

In the present disclosure, a reported beam, a report beam, and a UE report beam may be interchangeably interpreted.

### (Cell Switch Command (MAC CE) of Rel. 18)

A cell switch command transmitted by a MAC CE may include at least the following information.
- Information for identifying a target cell,
- Information related to timing advance (TA),
- One joint TCI state index for the target cell or one set of DL/UL TCI state indices for the target cell,
- Active DL/UL BWP of the target cell.

Regarding the presence of a beam indication in the cell switch command, the following may be supported for at least a certain scenario.
- A field indicating one joint TCI state index for the target cell or one set of DL/UL TCI state indices for the target cell is always present in the cell switch command.
- UE operation related to a beam indication field for a RACH based handover scenario after the cell switch command.

### (Analysis)

In mobility of Rel. 19 or later versions, various use cases are assumed. For example, in an industrial communication system, there are cases such as industrial equipment remote control and factory automation. In real-time interactive services, there are AI based/XR services.

As improvements of mobility functions in these use cases, the following problems are presented.
- Enhancement of robustness in mobility,
- Reduction of interruption time/delay that leads to throughput reduction,
- Both of these.

As described above, in future radio communication systems, it is studied that the (event based) beam report based on an event is supported.

In particular, in Rel. 19, as cases affecting the beam report, the following needs to be supported. (1) CSI-RS based beam measurement.

According to (1), the bit size of the SSBRI/CRI may increase. (2) L1-SINR measurement.

According to (2), selection of one of L1-RSRP/SINR can be configured by using higher layer signaling (RRC).

In this manner, studies on definition related to the event based beam report are not sufficient. When these studies are not sufficient, communication with lower delay cannot be implemented, and this may cause reduction in enhancement of communication quality/throughput.

In light of these, the inventors of the present invention came up with the idea of a new method for a beam report related to mobility.

### (Various Interpretations etc.)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be replaced with a cell for transmitting a PDSCH. A candidate cell may mean a cell as a candidate to be a serving cell by L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell of an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. A target cell may be a cell selected from among a plurality of candidate cells. In the present disclosure, switch, change, and update may be interchangeably interpreted. A serving cell may be interpreted as a serving cell before switching or a serving cell after switching.

In the present disclosure, an event based beam report, an event triggered beam report, a (UE triggered) beam report triggered by the UE, and a (UE initiated) beam report initiated by the UE may be interchangeably interpreted.

In the present disclosure, an event triggered beam report may be simply referred to as a beam report/CSI report/L1-RSRP/SINR beam report.

In the present disclosure, a beam report of type 1 and a beam report for intra-cell beam switch may be interchangeably interpreted.

In the present disclosure, a beam report of type 2 and an inter-cell beam report may be interchangeably interpreted.

In the present disclosure, a beam report of type 2-1 and a beam report for inter-cell beam switch may be interchangeably interpreted.

In the present disclosure, a beam report of type 2-2 and a beam report for cell switch may be interchangeably interpreted.

In the present disclosure, a table, mapping, and association may be interchangeably interpreted.

In the present disclosure, a (new) MAC CE, UCI, a cell switch command, a beam switch command, a MAC CE for a beam report, and a MAC CE for cell switch may be interchangeably interpreted.

In the present disclosure, an event based beam report may be reported on a PUSCH (for example, a configured grant PUSCH, a grant based PUSCH). In other words, reported contents in the present disclosure may be transmitted using at least one of a MAC

### CE/UCI/PUCCH/PUSCH.

### (Radio Communication Method)

The embodiments of the present disclosure can be broadly classified as follows.
- Zeroth embodiment: Selection of a type of a beam report.
- First embodiment: Event different for each type of a beam report.
- Second embodiment: Reported contents for each type of a beam report.
- Third embodiment: UE operation (beam/cell switch) after a beam report.
- Fourth embodiment: UE operation (beam/cell switch timing) after a beam report.
- Fifth embodiment: Size of a UCI report.

Based on these, the embodiments will be described below.

In the present disclosure, the embodiments/options may each be employed individually, or a plurality of those may be employed in combination.

### <Zeroth Embodiment>

A zeroth embodiment relates to selection of a type of a beam report. The type of the beam report may be interchangeably interpreted as a type of a report configuration (for example, CSI-ReportConfig).

### {Embodiment 0-1}

A beam report based on an event is beneficial for reducing overhead/latency of the beam report.

In Rel. 19, as the types of the beam reports, the following may be defined.

### <Type 1: Intra-Cell Beam Report>

In the beam report, all the reported beams/SSBs/CSI-RSs/TRSs are associated with the PCI of the serving cell.

### <Type 2: Inter-Cell/Intra-Cell Beam Report>

In the beam report, all the reported beams/SSBs/CSI-RSs/TRSs are associated with the PCI of the serving cell or an additional cell/candidate cell.

The beam report of type 2 can be further classified into two types (type 2-1/2-2 described above). Application of either type 2-1/2-2 may be configured (selected) by RRC.

### <Type 2-1>

The beam report may mean an inter-cell/inter-multi-TRP beam report in Rel. 17.

### <Type 2-2>

The beam report may mean a beam report (for serving cell switch) in mobility of Rel. 18.

Incidentally, in a case of the gNB operating within a cell (intra-cell), the beam report of type 2 need not be supported (is unnecessary). Thus, it is preferable that the type of the beam report can be flexibly switched (selected) according to the use case to be applied.

In view of this, the gNB may configure/indicate the type of the beam report described above by higher layer signaling (for example, RRC (CSI-ReportConfig)/MAC CE)/physical layer signaling (for example, DCI).

The gNB may perform configuration/indication to select one of L1-RSRP/SINR by using higher layer signaling/physical layer signaling.

When an aperiodic CSI report is triggered by an event in the UE, the UE may transmit a CSI report including at least a part of the following contents.

The CSI report includes one or a plurality of non-serving cell indices (PCIs, or new IDs of non-serving cells having a short bit size (Re-indexing index of cell)). The CSI report may or may not include one or both of a serving cell indication (for example, new ID = 0) and a BWP ID. Details of the new ID (Re-indexing index of cell) will be described later.

A maximum supported number of reports of the non-serving cell may be configured by RRC. An actual number of selected/reported non-serving cells may be the maximum number of reports, or may be determined by the UE according to the measurement results. For example, the UE may transmit the CSI report only for the non-serving cell whose L1/L3 measurement results are larger than a specific threshold. Alternatively, the CSI report may be transmitted only for one non-serving cell (for example, a non-serving cell whose L1/L3 measurement results are the largest), and an event may be triggered. The number of non-serving cell indices may be explicitly or implicitly reported.

One or a plurality of SSB/CSI-RS indices (beam indices) may be included in the CSI report for each non-serving cell. One or a plurality of SSB/CSI-RS indices from the serving cell may or may not be included in the CSI report. A maximum supported number of reports of the beam index for each cell (or for each non-serving/serving cell) may be configured by RRC. An actual number of selected/reported beam indices for each cell (or for each non-serving/serving cell) may be the maximum number of reports, or may be determined by the UE according to the measurement results. For example, the UE may report only the beam index whose measurement results are larger than a specific threshold. Alternatively, the UE may report only a beam in which an event is triggered. The number of SSB/CSI-RS indices for each cell may be explicitly or implicitly reported.

The CSI report may include an L1-RSRP/L1-SINR value (an absolute value or a differential value) for each SSB/CSI-RS index. The CSI report may include an L3-RSRP value for each SSB/CSI-RS index, an L3-RSRP value for each of a plurality of beams (for example, a statistical value (an average value, a maximum value, or the like) of a plurality of reported beams), or an L3-RSRP value for each cell (for each non-serving/for each serving cell). The L3-RSRP value may be an absolute value or a differential value.

Whether to include at least a part of the contents of the present embodiment in the CSI report may be configured by RRC. For example, whether to report L3-RSRP may be configured by RRC.

For example, when a non-serving cell beam report is configured for the UE, the number of bits of the L1-RSRP value may be reduced relative to an existing number of bits. In other words, bits fewer than 7 bits may be used for L1-RSRP, and bits fewer than 4 bits may be used for differential L1-RSRP. For example, the number of bits of all the L1-RSRP values may be reduced, or the number of bits of the L1-RSRP value of the non-serving cell may be reduced relative to the number of bits of the L1-RSRP value of the serving cell. Consequently, overhead can be reduced. The number of bits to be used may be defined in a specification, or may be configured for the UE by higher layer signaling or the like.

A new MAC CE including a Logical Channel ID (LCID) may be defined, and may be used for the CSI report triggered by the event. An example of the new MAC CE will be described below. A "report" in the following description may mean a set of an SSB index, a Re-indexing index of cell, and L1-RSRP/L3-RSRP, for example. The SSB index in each of the drawings to be described later may be replaced with a CSI-RS index. In each of the drawings, for example, a report related to one serving cell and a report related to one or more non-serving cells may be included. The RSRP may be replaced with an SINR.

### {Embodiment 0-2}

### (Type Switching Method)

When the UE is configured with an event based beam report (beam report triggered/initiated by the UE), a type of the beam report may be configured/indicated by higher layer signaling/physical layer signaling. The type of the beam report may be at least one of type 1/2 (type 2-1/2-2) described above.

The type of the beam report is not limited to the above-described explicit configuration/indication by higher layer signaling/physical layer signaling, and may be implicitly configured/indicated. For example, the number of cells (additional cells/candidate cells) as a target of the beam report may implicitly indicate the type.

More specifically, when the number of cells of the event based beam report is 1, it may mean the beam report of type 1. Alternatively, when the number of cells of the event based beam report exceeds 1, it may mean the beam report of type 2. Furthermore, in a case of type 2, whether it is type 2-1 or 2-2 may be configured/indicated by higher layer signaling/physical layer signaling, may be predefined in a specification, or may be selected (determined) by a UE capability.

When type 2 is indicated by an implicit indication (the number of cells of the event based beam report exceeds 1), type 2-1 may be indicated as a default type. When type 2-2 is separately configured/indicated in addition to the implicit indication of type 2, the UE may apply the beam report of type 2-2. The default type when type 2 is indicated is not limited to type 2-1, and may be type 2-2.

According to the implicit indication, the type of CSI-ReportConfig can be determined in the same manner as existing specifications, and parameters related to the event based beam report can be configured for each CSI-ReportConfig. In this manner, by properly using CSI-ReportConfig, both of the normal periodic/semi-persistent/aperiodic CSI report and the event based beam report can be configured.

Note that a different UE capability may be reported for each type of the beam report. For example, the beam report of type 1 is a basic function, which must be supported by all the UEs. In other words, all the UEs support the event based beam report. Type 2 (type 2-1/2-2) may be an additional/optional function for type 1.

According to the zeroth embodiment, the UE can appropriately select the type of the beam report according to the use case of mobility.

### <First Embodiment>

A first embodiment relates to an event different for each type of a beam report.

In the event based beam report, the condition of the "event" described above may be different according to the configured/indicated type of the beam report. In a case of a common event, the condition of the event may be related to comparison between another beam and the current beam.

When the beam report of type 1 is configured/indicated, the condition of the "event" may target only the L1-RSRP/SINR associated with the serving cell. One example is a case in which a beam of the serving cell is superior to the current beam of the serving cell.

When the beam report of type 2 is configured/indicated, the condition of the "event" may target the L1-RSRP/SINR associated with both of the PCI different from the serving cell and the PCI of the serving cell. One example is a case in which a beam of a cell different from the serving cell is superior to the current beam of the serving cell.

Here, the "current beam" may be defined as one of the following.
- Indicated TCI state (joint TCI state/DL TCI state/UL TCI state) in the unified TCI framework.
- TCI state associated with a specific channel/signal/CORESET (for example, a TCI state of a CORESET).
- QCL source RS (for example, QCL type D/A) of the indicated TCI state. Which is used for QCL type D/A may be predefined in a specification, or may be configured/indicated by higher layer signaling/physical layer signaling.

According to the first embodiment, the type of the beam report and the condition of the event can be associated.

### <Second Embodiment>

A second embodiment relates to reported contents for each type of a beam report.

In the event based beam report, contents of the beam report and a field size of reported UCI/MAC CE may be different according to the configured/indicated type of the beam report.

### {Embodiment 2-0}

When the beam report of type 1 is configured/indicated, up to M SSBRIs/CRIs, a 7-bit absolute value, and up to (M-1) 4-bit differential values (for example, M = 4) may be included in the reported contents.

When the beam report of type 2-1 is configured/indicated, up to M SSBRIs/CRIs, a 7-bit absolute value, and up to (M-1) 4-bit differential values (for example, M = 4) may be included in the reported contents.

When the beam report of type 2-2 is configured/indicated, up to (M*L) SSBRIs/CRIs, a 7-bit absolute value, and up to (M*L-1) 4-bit differential values (for example, M = 4 and L = 4) may be included in the reported contents.

Here, the size of the SSBRI/CRI may be different depending on (according to) the type of the beam report. For example, in type 1 and type 2-1, the size of the SSBRI/CRI may be 6 bits. In type 2-2, information of the PCI is included in the SSBRI/CRI, and thus the size of the SSBRI/CRI may be (6*L) bits or (7*L) bits at most.

In both of type 2-1/2-2, when the beam report based on an event is supported, both the methods of reporting type 2-1/2-2 may be the same. In this case, information related to the PCI may be included in the SSBRI/CRI, or may be separately reported.

For example, for a new event triggered beam report for the current beam, the UE may apply the following options.

### <Option 1>

The current beam and the L1-RSRP/SINR value corresponding to the beam are always reported.

### <Option 2>

Whether the current beam is always reported is determined according to an RRC configuration.

In a case of the beam report by a MAC CE, the bit size of the SSBRI/CRI may be fixed regardless of the type (number of cells). When a MAC CE is used, information related to the PCI may be reported separately from the SSBRI/CRI. When a MAC CE is used, the L1-RSRP/SINR may be reported as an absolute value (a differential value need not be used).

A MAC CE (LCID) different for each type of the beam report may be defined. Alternatively, a common MAC CE may be used among different types. Details will be described in Embodiment 2-2.

### {Embodiment 2-1}

When the UE supports event based beam switch, and the operation is enabled by a new RRC parameter, the UE may apply the following options.

### <Option 1>

The UE may indicate a trigger of beam switch and a new beam (candidate beam) for the switch by using new UCI/MAC CE (beam switch command).

### <Option 2>

The UE may use UCI/MAC CE for indicating the type of the beam report described above (or a MAC CE for cell switch in LTM) for beam switch. In other words, the UE may indicate a trigger of beam switch and a new beam (candidate beam) for the switch by using the UCI/MAC CE (cell switch command).

In option 2, as beam switch indication methods, the following options can be further applied.

### <Option 2-1>

Only one of beam switch/beam report may be indicated by explicit bits. For example, when beam switch is indicated, such a restriction may be added that a MAC CE includes only one beam (in addition to the current beam when the beam is included) (2-1a). Alternatively, when a report for a plurality of beams by a MAC CE is permitted, and beam switch is triggered, a beam having the highest L1-RSRP/SINR may be selected as a switch target beam (2-1b).

### <Option 2-2>

As an implicit indication, for example, when a MAC CE includes only one beam (in addition to the current beam), it may mean that beam switch to a new beam is triggered.

### <Variations>

When a plurality of beams/RS IDs are reported in the event based beam report, the gNB may select one beam from a plurality of reported beams by using a confirmation response of the event triggered beam report. In this case, there is an advantage that the UE reports a plurality of beams when triggering beam switch.

New UCI/MAC CE, a beam switch command, and a cell switch command may be interchangeably interpreted.

In the present disclosure, when cell switch is performed, beam switch may also be performed. On the other hand, when beam switch is performed, cell switch may or may not be performed. In other words, the performance of beam switch does not necessarily mean that cell switch is performed.

### {Embodiment 2-2}

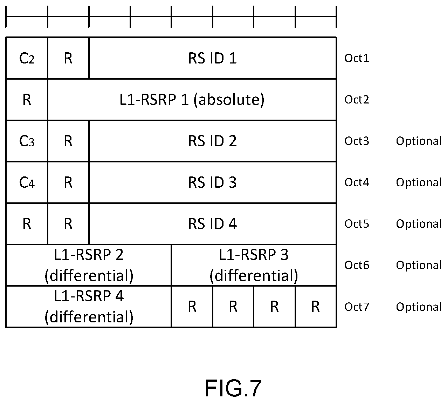

With reference to the drawings, specific reported contents will be described below. FIG. 7 to FIG. 9 are diagrams to show examples of a MAC CE for a beam report according to the second embodiment.

### {Option 1}

The MAC CE may be defined for each type of the beam report described above.

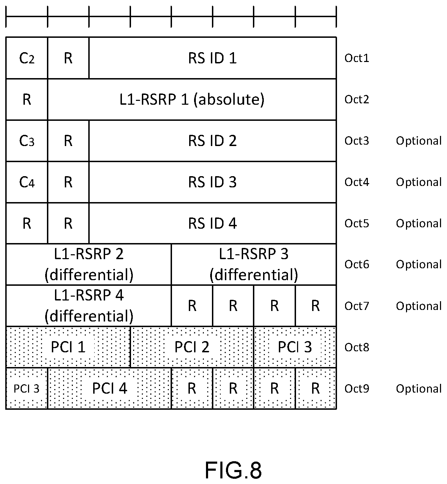

For example, FIG. 7 shows an example of a MAC CE for type 1, and FIG. 8 shows an example of a MAC CE for type 2 (type 2-1/2-2). The MAC CE of FIG. 7 and the MAC CE of FIG. 8 may include different LCIDs.

As shown in FIG. 7, the MAC CE for type 1 may include fields ("Cᵢ" fields (i = 2, 3, 4)) indicating the presence of second to fourth measurement results and RSs, fields ("RS ID i" fields (i = 2, 3, 4)) indicating RS IDs corresponding to up to the fourth highest beam, fields ("L1-RSRP i" fields (i = 2, 3, 4)) indicating measurement results, and reserved fields ("R" fields).

The field indicating the RS ID may include 6 bits in a case of only the SSBRI, or may include 7 bits in a case of the SSBRI/CRI.

Note that the diagrams to show examples of the MAC CE in the present disclosure show examples in which the measurement results are indicated by the L1-RSRP; however, these are merely examples, and the indicator of the measurement results is not limited to this.

In the MAC CE, the field corresponding to the measurement results of the best (first highest) beam may be defined by a first number of bits (for example, 7 bits). In this case, the field may indicate an absolute value of the measurement results.

In the MAC CE, the field corresponding to the measurement results of a beam other than the best beam (for example, the measurement results of the second to fourth beams) may be defined by a second number of bits (for example, 4 bits). In this case, the field may indicate a relative value/differential value relative to the measurement results of the best beam.

In the MAC CE, the field corresponding to the measurement results of a beam other than the best beam (for example, the measurement results of the second to fourth beams) may be defined by the first number of bits (for example, 7 bits). In this case, the field may indicate an absolute value of the measurement results.

In the MAC CE, the "Cᵢ" field may be indicated by 1 bit. When the "Cᵢ" field indicates a first value (for example, 0), it may indicate that a report of a corresponding beam is not performed. When the "Cᵢ" field indicates a second value (for example, 1), it may indicate that a report of a corresponding beam is performed.

For example, when the "C₂" field, the "C₃" field, and the "C₄" field each indicate 1, reports of the measurement results and the RS ID of the second beam, the measurement results and the RS ID of the third beam, and the measurement results and the RS ID of the fourth beam may be performed in the MAC CE. In other words, only when the "C₂" field, the "C₃" field, and the "C₄" field each indicate 1, the fields (RSRPs/PCIs) corresponding to the second to fourth beams may be present.

In FIG. 7, the fields in octets 3 to 7 may be optional.

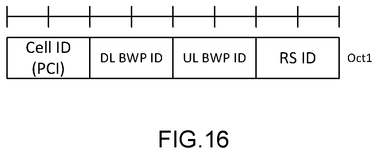

In the MAC CE for type 2 shown in FIG. 8, 16 bits corresponding to octets 8 to 9 may be added to the MAC CE for type 1 of FIG. 7.

The additional fields may include fields ("PCI i" fields (for example, i = 1, 2, 3, 4)) indicating PCIs of serving cells/additional cells/candidate cells and reserved fields ("R" fields). The field indicating the PCI may include 3 bits, for example.

Owing to the additional fields (with the reserved fields being utilized as well), PCIs of up to seven additional cells can be indicated in addition to the PCI of one serving cell. The size of each field can be changed as appropriate. The size of each field may be configured by RRC, may be predefined in a specification, or may be determined by a UE capability.

For example, the size of the field (RS ID field) indicating the RS ID may be increased or decreased depending on whether or not the field (PCI field) indicating the PCI is included. For example, when the field indicating the PCI is not included (for example, type 2-1), the RS ID field may be increased/enhanced (for example, 2 bits). In other words, the size of the PCI field may be variable according to the type of the beam report.

### {Option 2}

The MAC CE may be defined in common among different types of the beam reports described above.

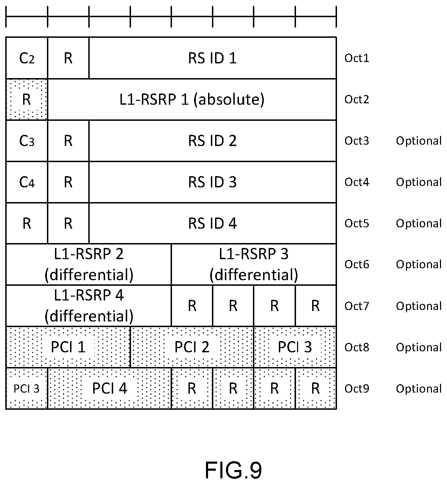

The MAC CE shown in FIG. 9 and the contents of each field are substantially the same as those of FIG. 8. However, whether or not the two lowest octets (octets 8 to 9) are present may be indicated by using the reserved field of 1 bit at the start of octet 2 (second octet).

For example, when the reserved field indicates the first value (for example, 0), it may indicate that the two lowest octets (octets 8 to 9) are not present, i.e., type 1. On the other hand, when the reserved field indicates the second value (for example, 1), it may indicate that the two lowest octets (octets 8 to 9) are present, i.e., type 2.

In other words, the two lowest octets (octets 8 to 9) may be present only when type 2 is indicated.

The reserved field may indicate whether at least one of report target beams is associated with the PCI of a cell different from the serving cell.

Specifically, when the reserved field indicates the first value (for example, 0), it may mean that all the beams are associated with the PCI of the serving cell. In other words, in this case, the two lowest octets need not be present.

Alternatively, when the reserved field indicates the second value (for example, 1), it may mean that at least a part of the beams are associated with the PCI of a cell different from the serving cell. In other words, in this case, the two lowest octets may be present.

Note that the MAC CE for options 1 to 2 described above does not include the "Cᵢ" field corresponding to the best beam. In other words, a report for at least one beam may be performed by using the MAC CE.

The "Cᵢ" field in the MAC CE for options 1 to 2 described above may be a field for indicating that a beam to be reported (for example, a beam with good measurement results) is not present.

### {Embodiment 2-3}

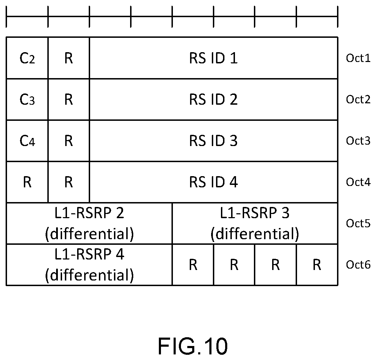

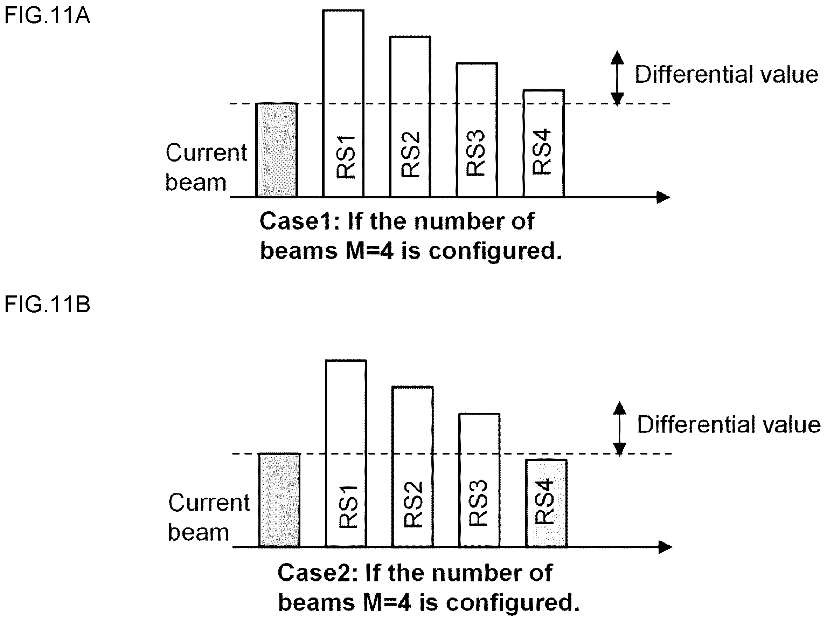

In Embodiment 2-3, a report of the current beam will be described. FIG. 10 is a diagram to show an example of a MAC CE for a beam report according to the second embodiment. FIG. 11A and FIG. 11B are diagrams to show a difference between the current beam and measured values according to the second embodiment.

In the event based beam report, only when a specific event occurs, the UE transmits a beam report. In this case, it is assumed that the reported beam is a beam better than the current beam.

Thus, the report target beam can be reported as a differential value relative to the current beam (with the current beam as a reference). Consequently, the amount of information (number of bits) for the report can be reduced, and overhead of the MAC CE can be saved. Here, the differential value should always be a positive value relative to the current beam.

The MAC CE shown in FIG. 10 may include fields ("Cᵢ" fields (i = 2, 3, 4)) indicating the presence of second to fourth measurement results and RSs, fields ("RS ID i" fields (i = 2, 3, 4)) indicating RS IDs corresponding to up to the fourth highest beam, fields ("L1-RSRP i" fields (i = 2, 3, 4)) indicating measurement results, and reserved fields ("R" fields).

In the MAC CE, the field corresponding to the measurement results of a beam may indicate a relative value/differential value relative to the measurement results of the current beam. In this case, a measured value (absolute value) of the current beam need not be included. By using only the differential value as a report target, communication overhead of the MAC CE can be reduced.

On the assumption that the reported beam is a beam better than the current beam, as shown in FIG. 11A, the differential values of an RS1 to an RS4 relative to the current beam may be reported as positive values.

On the other hand, as shown in FIG. 11B, when a certain beam is not better than the current beam (for example, the RS4), the differential value of the RS4 may or may not be reported.

For example, when the MAC CE is used for reporting, the field size is variable. Thus, when the UE is configured to report four beams, a negative differential value (the differential value of the RS4) need not be reported (need not be included in the report target).

In contrast, when UCI is used for reporting (in a case of a UCI based beam report), a payload is fixed. Thus, the UE needs to report the negative differential value (the differential value of the RS4).

### <Variations>

Whether the absolute value of the L1-RSRP relative to the current beam is added may be configured/indicated by higher layer signaling/physical layer signaling, may be predefined in a specification, or may be determined by a UE capability report. For example, when a UE capability is reported, the UE may add a new field to the MAC CE/UCI for reporting.

### <Further Variations>

Whether the absolute value relative to the current beam is reported may be determined based on a certain threshold. For example, the UE may perform reporting only when the absolute value relative to the current beam is smaller/larger than X dB. In this case, X may be configured/indicated by higher layer signaling/physical layer signaling, may be predefined in a specification, or may be determined by a UE capability report. Note that, as a case in which the gNB desires to recognize the absolute value of the current beam, there is a case in which the absolute value is significantly low (almost equivalent to a failure).

### {Embodiment 2-4}

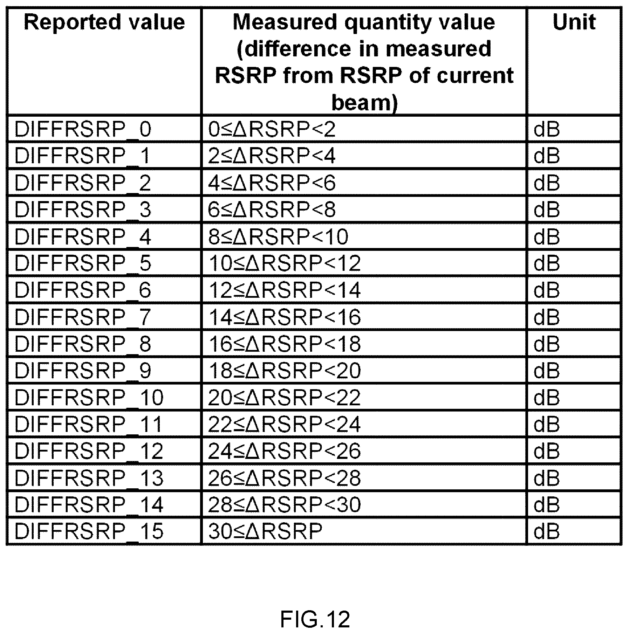

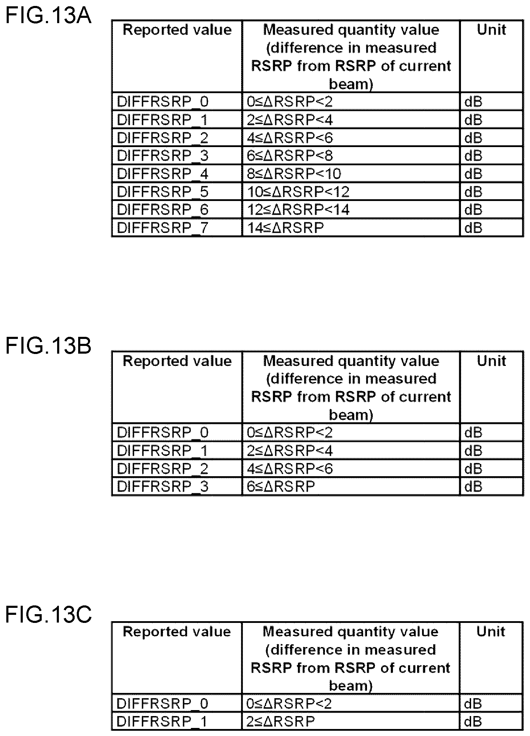

In Embodiment 2-4, regarding a report of the current beam, a table of differential values will be described. FIG. 12 is a diagram to show an example of mapping of an RSRP measurement report (association between reported values and measured values) according to the second embodiment. FIG. 13A to FIG. 13C are diagrams to show examples of mapping of an RSRP measurement report (association between reported values and measured values) according to the second embodiment.

In order to report the differential values described in Embodiment 2-3, the table of FIG. 12 or FIG. 13 may be referred to. Each row of the table shown in FIG. 12 and FIG. 13 is merely an example. Thus, a value of each row, the number of rows, and the like can be changed as appropriate. For example, when some rows are omitted, the indices of the reported values may be compacted and numbered accordingly.

FIG. 12 shows an example of a 4-bit table of differential values. In FIG. 12 (the same applies to FIG. 13A to FIG. 13C), the indices (DIFFRSRPs 0 to 15) of the reported values may be associated with certain ranges of the measured values (differential values of measured RSRP from the RSRP of the current beam).

In FIG. 12, the measured values (differential values) may be positive values. Note that the differential values may include negative values. For example, in DIFFRSRP 0, by setting RSRP < 2, a negative value can be included.

Although FIG. 12 shows an example of the RSRP, the RSRP is not limited, and application to the SINR is also possible.

In order to save overhead of the UCI/MAC CE, a plurality of candidates may be indicated for the bit size for reporting the differential values. The bit size for reporting the differential values may be configured/indicated by higher layer signaling/physical layer signaling, or may be determined by the UE for each report instance.

For example, as shown in FIG. 13A to FIG. 13C, the table of differential values may be represented by 1 to 3 bits. The number of rows of each table may be 2^{m} (m is the number of bits for reporting the differential values).

The UE may determine the table of differential values to be referred to according to the following options.

### <Option 1>

A plurality of tables may be defined (see FIG. 13), and any one table may be selected according to the field size (large or small) for reporting.

### <Option 2>

One 4-bit table may be defined (see FIG. 12). When 1 to 3 bits are selected, the UE may use the top 2^{m} rows. Here, m may represent the number of bits for reporting the differential values.

In FIG. 12 and FIG. 13 described above, the ranges of the differential values may be defined with different granularities for each table/row.

### {Variations of Second Embodiment}

In a case of a single-TRP operation, the reported beam may include one set of DL/UL beams. In a case of a multi-TRP operation, the reported beam may include two or more sets of DL/UL beams.

The UE may report only the DL beam, or may report both of the DL beam and the UL beam. The beam report may be referred to as a joint DL/UL beam report, for example.

The event for triggering the beam report may be common for the DL beam and the UL beam. The event for triggering the beam report need not be different between the DL beam and the UL beam.

The reported beam may be applied to both of the DL and the UL.

For example, when the joint TCI is configured for a cell, the UE may report only the DL beam. Alternatively, when the separate TCI is configured for a cell, the UE may report both of the DL beam and the UL beam. In this case, the DL beam may be associated with the SSB/CSI-RS. The UL beam may be associated with the SSB/CSI-RS/SRS.

The UE may perform a beam report related to at least one or any one of the DL beam and the UL beam.

The beam report may be referred to as a separate DL/UL beam report, for example.

The event for triggering a DL beam report and the event for triggering a UL beam report may be separately defined/used.

The event based beam report may be transmitted by using a MAC CE in the UL or UCI in the PUSCH/PUCCH.

For example, when the UCI is used, the number of reported cells/beams may be configured by the NW.

When the MAC CE is used, the number of reported cells/beams may be configured/indicated by higher layer signaling/physical layer signaling, or may be determined by the UE based on a maximum number predefined in a specification.

According to the second embodiment described above, the UE can appropriately control the beam report for each type.

### <Third Embodiment>

A third embodiment relates to a UE operation (beam/cell switch) after a beam report.

### {Embodiment 3-1}

After an event based beam report, a beam/cell may be switched to the beam/cell reported in the event based beam report. In other words, the UE/gNB may trigger beam/cell switch/indication/activation by (transmission and reception of) the event triggered beam report.

Here, an entity that requests beam/cell switch needs to be clarified. The UE/gNB may trigger (perform) beam/cell switch, based on at least one of the following options (beam/cell switch trigger condition), for example.

### <Option 1>

Only when the gNB configures/indicates beam/cell switch by using higher layer signaling (RRC/MAC CE)/physical layer signaling (DCI), the UE/gNB may trigger beam/cell switch.

### <Option 2>

Only when the UE/gNB triggers/indicates beam/cell switch by using a MAC CE/UCI (the event based beam report, in particular), the UE/gNB may trigger beam/cell switch. For example, a 1-bit field (the R field of the second embodiment) of the UCI/MAC CE may indicate whether or not a field indicating beam/cell switch is present.

### <Option 3>

The UE/gNB may trigger beam/cell switch without requiring an indication of the gNB/UE. For example, when the UE transmits the event based beam report, the UE/gNB may switch to the beam/cell (for example, the best beam, the first RS) reported in the event based beam report. In other words, transmission of the event based beam report may be the beam/cell switch trigger condition.

Option 3 assumes a case in which the current beam/cell is different from the reported contents (beam/cell reported in the event based beam report).

### {Embodiment 3-2}

In the event based beam report, the contents to be reported may be different according to the type of the beam report.

For example, in a case of the beam report of type 1, additional information need not be included, except for option 2 described above. Alternatively, in the beam report, 1-bit information indicating whether or not beam switch is triggered may be included.

In a case of the beam report of type 2 (related to cell switch, in particular), all/part of the cell switch command related to mobility of Rel. 18 may be included. For example, at least one piece of the following information may be included.
- A target cell ID,
- A DL BWP ID and a UL BWP ID of a target cell,
- One joint TCI state ID for a target cell, or one pair of TCI state IDs (a DL TCI state and a UL TCI state ID) for a target cell,
- Timing advance (TA) related information.

The TCI state described above may include an explicit indication of the TCI state ID for the target cell, or an implicit indication of QCL assumption. As the implicit indication, for example, after transmitting the event based beam report, the UE may assume that the indicated TCI state for the target cell has a QCL relationship with one of the SSBRIs/CRIs reported in the event based beam report.

Each field described above may be present only when the UE triggers cell switch.

### {Embodiment 3-3}

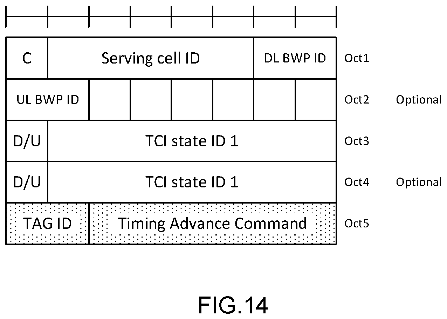

With reference to FIG. 14 to FIG. 16, a MAC CE (which may be referred to as a MAC CE for cell switch) related to Embodiments 3-1 to 3-2 described above will be described. FIG. 14 to FIG. 16 are diagrams to show examples of a MAC CE for cell switch according to the third embodiment. The following MAC CE may be added to the MAC CE (for a beam report/for beam switch) of the second embodiment described above, or may be independently transmitted separately from the MAC CE of the second embodiment. In other words, the UE may transmit only the MAC CE of the present embodiment without transmitting the MAC CE of the second embodiment.

FIG. 14 is an example of a MAC CE for type 2. As shown in FIG. 14, the MAC CE for type 2 may include a C field, a field (serving cell ID field) indicating a serving cell ID, fields (DL/UL BWP ID fields) indicating DL/UL BWP IDs, fields indicating DLs/ULs, fields indicating TCI state IDs, a field (TAG ID field) indicating a TAG ID, and a field (TAC field) indicating a timing advance command (TAC).

The size of each field is not limited to this, and can be changed as appropriate.

The C field may indicate whether a second (UL) TCI state ID is present. When C = 1, octet 2/4 is present. In other words, when C = 0, octet 2/4 need not be present.

As a variation, in the R field (for example, see the second octet of FIG. 9), whether at least one of the reported beams is associated with the PCI different from the serving cell may be indicated. For example, when R = 0, all the beams may be associated with the serving cell. When R = 1, a part of the beams may be associated with (the PCI of) a cell different from the serving cell. In this case, for example, the two lowest octets of FIG. 9 may be present.

The TAG ID field indicates a timing advance group index, and may be used for an indication of a TAG ID of an addressed TAG. The TAC field may indicate an index value TA (0, 1, 2, ..., 63) used for control of a timing adjustment amount/value (relative amount/relative value) to be applied by a MAC entity.

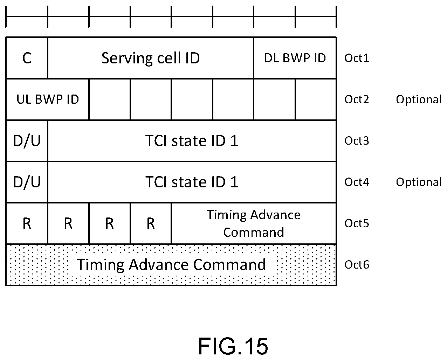

The MAC CE shown in FIG. 15 may include reserved fields and a TAC field instead of the TAG ID field/TAC field shown in octet 5 of FIG. 14. The TAC field of FIG. 15 may include 12 bits, for example, across two octets (octets 5 to 6). The TAC field of FIG. 15 may indicate an index value used for control of an actual TA amount/value (absolute amount/absolute value) to be applied by a MAC entity.

As another example of the MAC CE for type 2, fields shown in FIG. 16 may be added.

As shown in FIG. 16, the MAC CE for type 2 may include a cell ID field, fields (DL/UL BWP ID fields) indicating DL/UL BWP IDs, and a field (RS ID field) indicating an RS ID.

The cell ID (PCI ID) field may indicate that a target cell ID is one of cell (PCI) IDs reported by the event based beam report. For example, when the number L of configured cells = 4, the target cell ID can be indicated by using a 2-bit cell ID field.

When the separate TCI state is not configured in the target cell/BWP, the UL BWP ID need not be included.

Similarly to FIGS. 14 and 15, the TAG ID/TAC field may be added.

According to the example of FIG. 16, as compared to FIGS. 14 and 15, communication overhead of the MAC CE can be reduced.

According to the third embodiment described above, a UE operation (beam/cell switch) after a beam report can be appropriately controlled.

### <Fourth Embodiment>

A fourth embodiment relates to an operation (beam/cell switch timing) after a beam report.

### {Embodiment 4-1}

In Embodiment 4-1, update of a beam/cell/TPC parameter will be described.

After transmitting the event based beam report, the UE/gNB may update a beam/cell/TPC parameter to the beam/cell/TPC parameter reported in the event based beam report.

The UE/gNB may apply at least one of the following options as an update timing.

### <Option 4-1>

The UE/gNB may update the beam/cell/TPC parameter Y symbols/milliseconds after (transmission and reception of) the event based beam report.

### <Option 4-2>

The UE/gNB may update the beam/cell/TPC parameter Y symbols/milliseconds after (transmission and reception of) a confirmation response of the gNB to (transmission and reception of) the event based beam report.

When beam/cell switch is triggered, the update timing of the beam/cell/TPC parameter may be the same as or different from the timing of beam/cell switch. When beam/cell switch is triggered, a longer time is required for update.

Y (update timing) described above may be configured/indicated for each of the types of the beam reports (type 1 of intra-cell beam switch, type 2-1 of inter-cell beam switch, or type 2-2 of cell switch), or for each of presence or absence of the cell switch command. Y may be configured/indicated by higher layer signaling/physical layer signaling, may be predefined in a specification, or may be determined by a UE capability report. Y may be the same or different for each of presence or absence of the SCS/band/FR/cell switch command.

### <Variations>

When none of options 4-1 to 4-2 described above is applied (supported), after the gNB receives the event based beam report, the UE/gNB may use an existing beam indication/cell switch command.

### <Specific Examples>

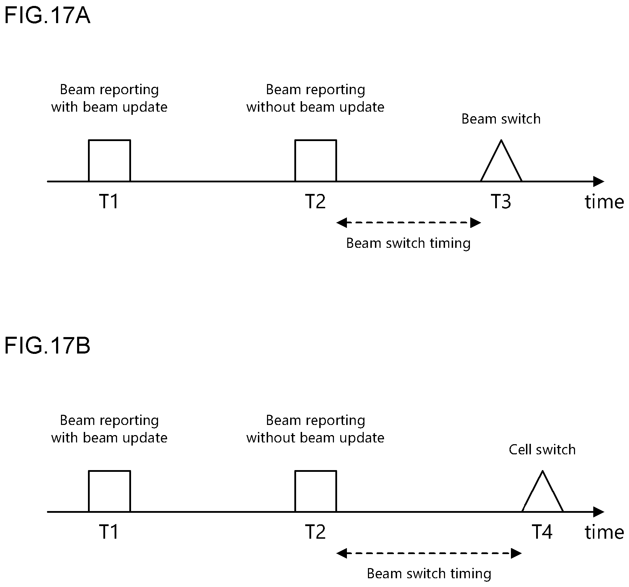

FIG. 17A and FIG. 17B are diagrams to show examples of a beam switch timing according to the fourth embodiment. FIG. 17A shows a case in which intra-cell beam switch is triggered (i.e., type 1). FIG. 17B shows a case in which inter-cell beam switch is triggered (i.e., type 2).

As shown in FIG. 17A, at a certain timing T1, the UE transmits a beam report with beam update. At a subsequent timing T2, the UE transmits a beam report without beam update. Furthermore, the UE may perform beam switch at a subsequent timing T3 (i.e., Y symbols/milliseconds after T2).

As shown in FIG. 17B, at a certain timing T1, the UE transmits a beam report with beam update. At a subsequent timing T2, the UE transmits a beam report without beam update. Furthermore, the UE may perform beam switch (cell switch) at a subsequent timing T4 (i.e., Y symbols/milliseconds after T2).

Note that the beam switch timings of T2 to T4 (beam switch period Y) in FIG. 17B may be longer than the beam switch timings of T2 to T3 (beam switch period Y) in FIG. 17A. The intention is that switching requires more time as cell switch is involved.

### {Embodiment 4-2}

In Embodiment 4-2, update of the QCL/TPC parameters will be described.

The TCI of a specific channel/signal may be updated to q_{new}. q_{new} may mean a set of beams for update, and may include a plurality of RS IDs (or a set of RS IDs) reported in the event based beam report.

Update of q_{new} can be applied to all the channels/signals/CORESETs/resource sets/resources of the specific channel/signal, or a part of the specific channel/signal (for example, only a channel/signal following the indicated TCI state (joint/DL/UL TCI state)).

The TPC parameter may be updated after beam/cell switch. For example, in existing specifications (TPC parameter update after completion of Beam Failure Recovery (BFR) per cell of Rel. 17), application is possible with the corresponding SCell being replaced with the target cell. Alternatively, in (TPC parameter update after completion of BFR per TRP of Rel. 18), application is possible with the corresponding cell being replaced with the target cell.

Specifically, transmission power of a UL channel/signal (PUSCH/PUCCH/SRS) may be determined (updated) based on the following parameters (TPC parameters).
- An RS index (q_{d} = q_{new}) for acquiring a downlink path loss estimation value,
- Values of parameters P_{O_PUSCH,b,f,c} (j), α_{b,f,c} (j), and a PUSCH power control adjustment state l related to target received power, which are provided by p0-Alpha-CLID-PUSCH-Set associated with a minimum value of ul-powercontrolId of the target cell,
- Values of parameters P_{O_PUCCH,b,f,c}(qᵤ) and a PUCCH power control adjustment state l related to target received power, which are provided by p0-Alpha-CLID-PUCCH-Set associated with a minimum value of ul-powercontrolId of the target cell,
- Values of parameters P_{O_SRS,b,f,c} (qₛ), α_{SRS,b,f,c} (qₛ), and an SRS power control adjustment state l related to target received power, which are provided by p0-Alpha-CLID-SRS-Set associated with a minimum value of ul-powercontrolId of the target cell.

According to the fourth embodiment described above, a UE operation (beam/cell switch timing) after a beam report can be appropriately controlled.

### <Fifth Embodiment>

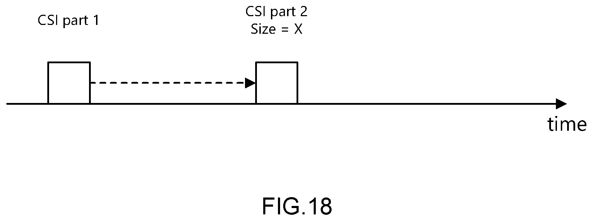

A fifth embodiment relates to the size of a UCI report. FIG. 18 is a diagram to show an example of CSI part transmission according to the fifth embodiment.

In the event based beam report in the PUCCH, the gNB needs to know (recognize) the size of UCI before decoding the PUCCH. Thus, gNB implementation may be complex.

Incidentally, in the CSI of enhanced type 2 in Rel. 16, the size of CSI part 2 is variable. More specifically, the UE can determine the size of CSI part 2 for each report. Information for determining the size of CSI part 2 is reported by CSI part 1.

On the other hand, in a case of the event based beam report, the size of UCI is not fixed. For example, as shown in the second embodiment described above, the UE can select a report target beam.

As shown in the third embodiment, the UE can examine whether to trigger beam/cell switch. When beam/cell switch is triggered, additional information is transmitted in addition to the beam report.

In other words, in a case of the event based beam report, it is assumed that the size of UCI is variable. In this case, it is necessary to clarify a method for avoiding blind detection of the payload size of the PUCCH by the gNB.

In view of this, the UE may transmit a part of the information described above (additional fields of the MAC CE) by using CSI part 2. The UE may transmit information (some indication fields of CSI part 2) for determining size X of CSI part 2 to the gNB as other UCI of CSI part 1 (see FIG. 18).

In other words, CSI part 1 may include information related to the UCI size of CSI part 2. CSI part 1 and CSI part 2 may be reported by one PUCCH resource.

### <Variations>

CSI part 1 and CSI part 2 may be transmitted by different PUCCH resources/UCIs.

The event based beam report may be applied to all/part of a periodic/semi-persistent/aperiodic report.

A part of the fields of proposal described above may be reported in CSI part 1, and another part may be reported in CSI part 2.

According to the fifth embodiment described above, in the event based beam report, the gNB can appropriately recognize the size of UCI.

### <Supplements>

### {Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by the MAC CE, the MAC CE may be identified by a new logical channel ID (LCID) being included in a MAC sub-header, the new logical channel ID being not defined in an existing specification.

In a case where the notification described above is performed by the DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to a UE in the above-described embodiments may be performed periodically, semi-persistently, or aperiodically.

### {Notification of Information from UE}

Any notification of information from a UE (to a NW) (in other words, any transmission/reporting, in a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by the MAC CE, the MAC CE may be identified by a new LCID being included in a MAC sub-header, the new LCID being not defined in an existing specification.

In a case where the notification described above is performed by the UCI, the notification described above may be transmitted by using a PUCCH or a PUSCH.

Any notification of information from a UE in the above-described embodiments may be performed periodically, semi-persistently, or aperiodically.

### {Application of Respective Embodiments}

At least one of the above-described embodiments may be applied to a case where a specific condition is satisfied. The specific condition may be defined in a specification, or may be notified to the UE/BS by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information regarding at least one of the embodiments described above
- supporting of the event based beam report
- supporting of the beam report of type 1/2/2-1/2-2
- supporting of mobility of Rel. 18 or later versions

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling/physical layer signaling. For example, the specific information may be information indicating enabling of cell switch using a potential cell switch command, any RRC parameter for a specific release (for example, Rel. 18/19), or the like.

When not supporting at least one of the specific UE capabilities or not configured with the specific information, the UE may apply operation of Rel. 15/16/17, for example.

### (Supplementary Note)

Regarding one embodiment (zeroth to second embodiments) of the present disclosure, the following supplementary notes of the invention will be given.

### {Supplementary Note 1}

A terminal including:
a receiving section that receives information related to a type of an event based beam report; and
a control section that determines a type of a beam report, based on the information, wherein
the type of the beam report is one of type 1 indicating an intra-cell beam report and type 2 indicating an inter-cell beam report.

### {Supplementary Note 2}

The terminal according to supplementary note 1, wherein the control section determines the type of the beam report, based on the number of cells of a report target.

### {Supplementary Note 3}

The terminal according to supplementary note 1 or 2, wherein a condition of an event for triggering the event based beam report is different for each type of the beam report.

### {Supplementary Note 4}

The terminal according to any one of supplementary notes 1 to 3, including a transmitting section that performs transmission by including a physical cell identity (PCI) for a serving cell, an additional cell, or a candidate cell in the beam report.

### (Supplementary Note)

Regarding one embodiment (second embodiment) of the present disclosure, the following supplementary notes of the invention will be given.

### {Supplementary Note 1}

A terminal including:
a control section that controls an event based beam report; and
a transmitting section that performs transmission by including a trigger of beam switch and information related to a candidate beam for the beam switch in a beam report.

### {Supplementary Note 2}

The terminal according to supplementary note 1, wherein the control section performs control to include a differential value relative to a measured value of a current beam in the beam report.

### {Supplementary Note 3}

The terminal according to supplementary note 1 or 2, wherein the control section controls the beam report by using a MAC control element being different for each type of the beam report or being common.

### {Supplementary Note 4}

The terminal according to any one of supplementary notes 1 to 3, wherein the control section performs control to perform transmission by including a physical cell identity (PCI) for a serving cell, an additional cell, or a candidate cell in the beam report.

### (Supplementary Note)

Regarding one embodiment (third to fifth embodiments) of the present disclosure, the following supplementary notes of the invention will be given.

### {Supplementary Note 1}

A terminal including:
a transmitting section that transmits an event based beam report; and
a control section that controls beam switch or cell switch after a beam report.

### {Supplementary Note 2}

The terminal according to supplementary note 1, wherein the control section controls contents of the beam report for each type of the beam report.

### {Supplementary Note 3}

The terminal according to supplementary note 1 or 2, wherein the control section controls a timing of the beam switch or the cell switch for each type of the beam report.

### {Supplementary Note 4}

The terminal according to any one of supplementary notes 1 to 3, wherein the transmitting section transmits information related to a size of uplink control information by using a channel state information part.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

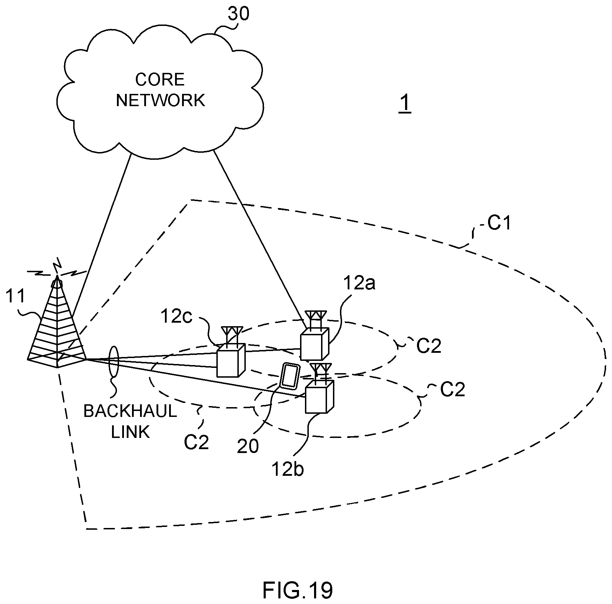

FIG. 19 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

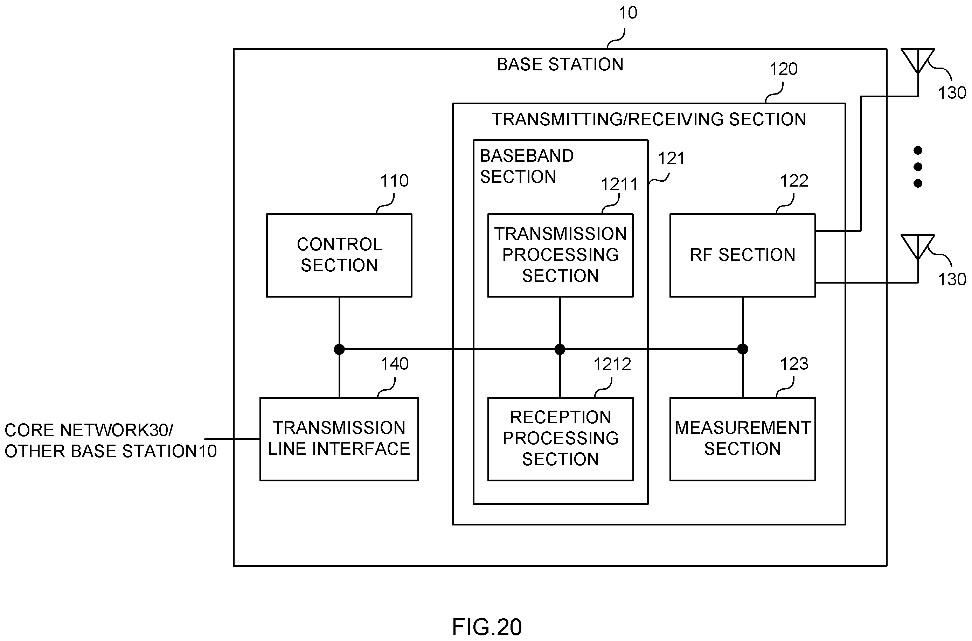

FIG. 20 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to a type of an event based beam report. The transmitting/receiving section 120 may receive a beam report corresponding to a type determined based on the information. The type of the beam report is one of type 1 indicating an intra-cell beam report and type 2 indicating an inter-cell beam report.

The control section 110 may control an event based beam report. The transmitting/receiving section 120 may perform reception by including a trigger of beam switch and information related to a candidate beam for the beam switch in a beam report.

The transmitting/receiving section 120 may receive an event based beam report. The control section 110 may control beam switch or cell switch after a beam report.

### (User Terminal)

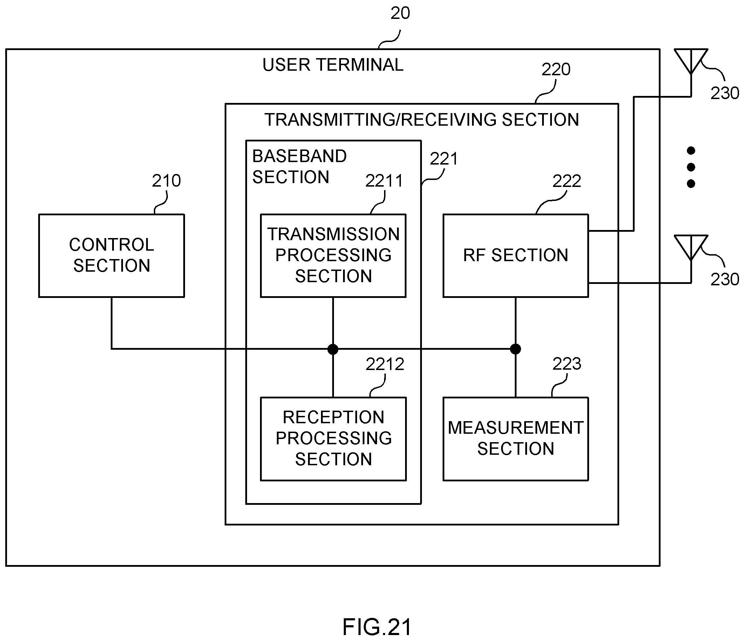

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a type of an event based beam report. The control section 210 may determine a type of a beam report, based on the information. The type of the beam report is one of type 1 indicating an intra-cell beam report and type 2 indicating an inter-cell beam report. The control section 210 may determine the type of the beam report, based on the number of cells of a report target. A condition of an event for triggering the event based beam report is different for each type of the beam report. The transmitting/receiving section 220 may perform transmission by including a physical cell identity (PCI) for a serving cell, an additional cell, or a candidate cell in the beam report.

The control section 210 may control an event based beam report. The transmitting/receiving section 220 may perform transmission by including a trigger of beam switch and information related to a candidate beam for the beam switch in a beam report. The control section 210 may perform control to include a differential value relative to a measured value of a current beam in the beam report. The control section 210 may control the beam report by using a MAC control element being different for each type of the beam report or being common. The control section 210 may perform control to perform transmission by including a physical cell identity (PCI) for a serving cell, an additional cell, or a candidate cell in the beam report.

The transmitting/receiving section 220 may transmit an event based beam report. The control section 210 may control beam switch or cell switch after a beam report. The control section 210 may control contents of the beam report for each type of the beam report. The control section 210 may control a timing of the beam switch or the cell switch for each type of the beam report. The transmitting/receiving section 220 may transmit information related to a size of uplink control information by using a channel state information part.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

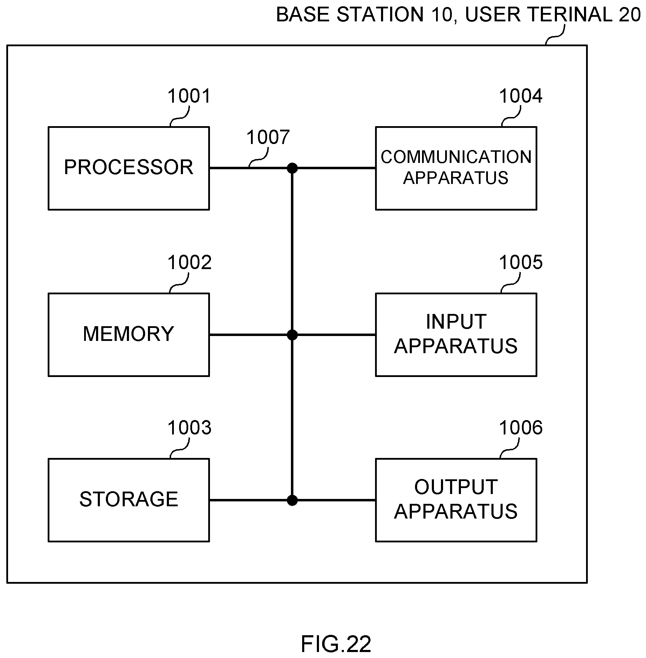

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot.

A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

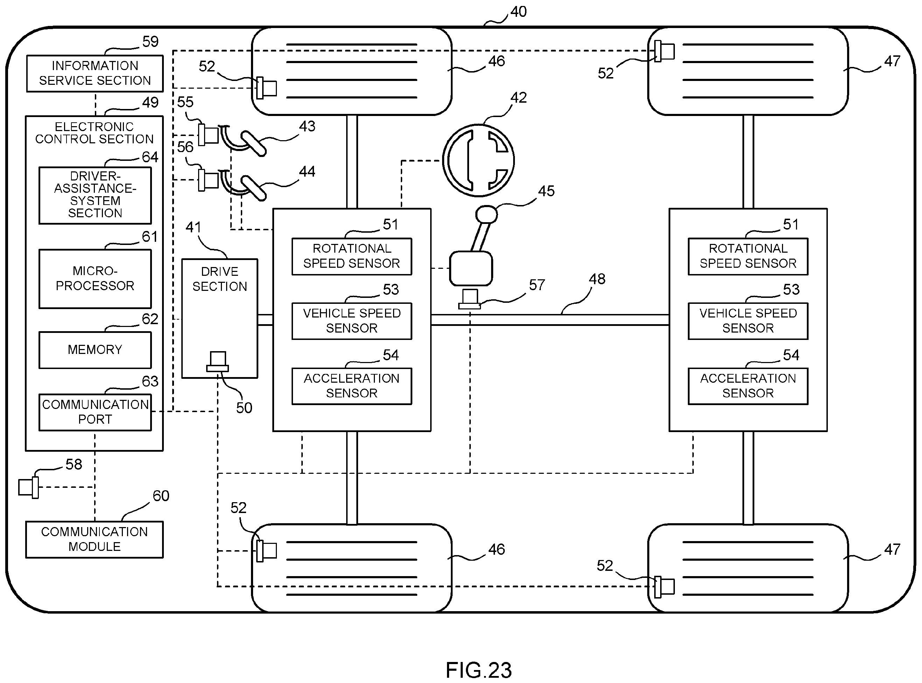

FIG. 23 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information related to a type of an event based beam report; and
a control section that determines a type of a beam report, based on the information, wherein
the type of the beam report is one of type 1 indicating an intra-cell beam report and type 2 indicating an inter-cell beam report.

2. The terminal according to claim 1, wherein
the control section determines the type of the beam report, based on the number of cells of a report target.

3. The terminal according to claim 1, wherein
a condition of an event for triggering the event based beam report is different for each type of the beam report.

4. The terminal according to claim 1, comprising
a transmitting section that performs transmission by including a physical cell identity (PCI) for a serving cell, an additional cell, or a candidate cell in the beam report.

5. A radio communication method for a terminal, the radio communication method comprising:
receiving information related to a type of an event based beam report; and
determining a type of a beam report, based on the information, wherein
the type of the beam report is one of type 1 indicating an intra-cell beam report and type 2 indicating an inter-cell beam report.

6. A base station comprising:
a transmitting section that transmits information related to a type of an event based beam report; and
a receiving section that receives a beam report corresponding to a type determined based on the information, wherein
the type of the beam report is one of type 1 indicating an intra-cell beam report and type 2 indicating an inter-cell beam report.
